# EUROPÄISCHE PATENTSCHRIFT

(11) **EP 1 854 041 B1**
(45) Veröffentlichungstag und Bekanntmachung des Hinweises auf die Patenterteilung: **22.05.2019**
(21) Anmeldenummer: 06706020.2
(22) Anmeldetag: 27.02.2006
(51) Int. Cl.: G06F 21/35, G06K 7/10

(54) **CHIPKARTE FÜR EINE KOMMUNIKATIONSEINRICHTUNG, KOMMUNIKATIONSEINRICHTUNG SOWIE VERFAHREN ZUM DATENMANAGEMENT NUTZERSPEZIFISCHER DATEN**
CHIP CARD FOR A COMMUNICATIONS DEVICE, COMMUNICATIONS DEVICE AND METHOD FOR MANAGING USER-SPECIFIC DATA
CARTE A PUCE DESTINEE A UN DISPOSITIF DE COMMUNICATION, DISPOSITIF DE COMMUNICATION ET PROCEDE DE GESTION DE DONNEES SPECIFIQUES A L'UTILISATEUR

(30) Priorität: 28.02.2005 DE 102005009051
(43) Veröffentlichungstag der Anmeldung: 14.11.2007
(73) Patentinhaber: Vodafone GmbH, 40549 Düsseldorf (DE)
(72) Erfinder: REISS, Christoph, 61440 Oberursel (DE)
(74) Vertreter: Müller, Thomas
(86) Internationale Anmeldenummer: PCT/DE2006/000365
(87) Internationale Veröffentlichungsnummer: WO 2006/089541

(56) Entgegenhaltungen:
- EP-B- 0 990 355
- US-A1- 2002 178 369
- US-A1- 2003 218 532
- US-A1- 2004 172 369
- JOSEF NOLL: "The mobile phone-access and authentication"[Online] 14. Januar 2005 (2005-01-14), Seiten 1-25, XP002400055 Gefunden im Internet: URL:http://jnoll.homelinux.org/jnoll/ref/2 00501FFI-MobileDevelopments-Noll.pdf> [gefunden am 2006-09-21]
- "NEAR FIELD COMMUNICATION INTERFACE AND PROTOCOL (NFCIP-1)" STANDARD ECMA, XX, XX, Bd. ECMA 340, Dezember 2004 (2004-12), Seite COMPLETE, XP007900604

## Beschreibung

Die vorliegende Erfindung betrifft zunächst eine Chipkarte für eine, insbesondere mobile, Kommunikationseinrichtung gemäß dem Oberbegriff von Patentanspruch 1. Weiterhin betrifft die Erfindung eine Kommunikationseinrichtung gemäß dem Oberbegriff von Patentanspruch 7, sowie ein Verfahren zum Datenmanagement nutzerspezifischer Daten in einem Kommunikationssystem gemäß den Oberbegriffen der Patentansprüche 12 und 13.

Mit der rasanten Entwicklung in der Kommunikationstechnologie - insbesondere in der Telekommunikation - bieten sich für die Betreiber und Nutzer von Kommunikationsnetzen und -systemen immer neue Anwendungs- und Betätigungsfelder und -möglichkeiten.

Seit der Einführung der Mobilfunk-Telekommunikation oder des Internet beispielsweise ist eine hohe Mobilität der Nutzer gewährleistet, ohne dass dabei die Kommunikationsmöglichkeiten beziehungsweise -qualitäten reduziert würden. Vielmehr sind die Nutzer von Kommunikationsnetzen und -systemen heutzutage mit entsprechenden mobilen Kommunikationseinrichtungen ausgestattet, bei denen es sich je nach Kommunikationsnetz und Anwendungsgebiet beispielsweise um Mobiltelefone, Laptops, PDAs (Personal Digital Asssistant) oder dergleichen handeln kann. Mittlerweile ist es auch schon üblich geworden, dass ein und dieselbe Kommunikationseinrichtung für den Einsatz in verschiedenen Kommunikationsnetzen verwendet werden kann.

Üblicherweise verfügen Kommunikationseinrichtungen über eine Chipkarte, welche ein Mittel zur Zugangsberechtigung für die Teilnahme in einem Kommunikationsnetz darstellt. Handelt es sich bei einer Kommunikationseinrichtung um ein Mobiltelefon, liegt die Chipkarte üblicherweise in Form einer so genannten SIM-Karte (Subscriber Identity Module) vor. Auf einer solchen SIM-Karte sind Kommunikationsnetzbetreiber-spezifische Daten abgelegt, wie beispielsweise Rufnummern, Identifikationsnummern und dergleichen. Durch diese Kommunikationsnetzbetreiber-spezifischen Daten wird die Kommunikation überhaupt erst ermöglicht. Chipkarten weisen daher wenigstens eine Prozessoreinheit und wenigstens eine Speichereinrichtung zum zumindest zeitweiligen Speichern der Kommunikationsnetzbetreiber-spezifischen Daten auf.

Da der Nutzer nunmehr über eine mobile Kommunikationseinrichtung verfügt, die er stets bei sich tragen kann, eröffnen sich - neben dem eigentlichen bestimmungsgemäßen Gebrauch wie etwa dem Telefonieren, der Erzeugung und dem Austausch von Daten oder dergleichen - nunmehr auch noch andere Anwendungsmöglichkeiten.

Zu denken ist hier beispielsweise an die so genannten "Location Based Services". Diese Dienste basieren darauf, dass der jeweils aktuelle Standort einer mobilen Kommunikationseinrichtung ermittelt wird und anschließend eine standortbezogene Kommunikation, Interaktion oder dergleichen mit der Kommunikationseinrichtung stattfindet.

Aber es sind bereits auch noch andere Anwendungsmöglichkeiten bekannt geworden.

In der EP 0 990 355 B1 ist eine Chipkarte offenbart, die in einem Mobiltelefon eingebaut sein kann. Die Chipkarte verfügt über eine Prozessoreinheit und eine Speichereinrichtung. Ziel dieser bekannten Lösung ist es, dass auf der Chipkarte gespeicherte Daten durch eine externe Vorrichtung bearbeitet oder ausgelesen werden können. Dies geschieht über eine auf der Chipkarte implementierte Schnittstelle.

Beispielsweise ist in der DE 20 2004 016 344 U1 ein Abwicklungssystem zur Bereitstellung und Kontrolle eines elektronischen Tickets für einen Benutzer beschrieben. Ausgangspunkt für dieses bekannte Kommunikationssystem ist eine mobile Kommunikationseinrichtung, beispielsweise ein Mobiltelefon oder dergleichen, welches einem Nutzer des Systems zugeordnet ist. Über die Kommunikationseinrichtung kommuniziert der Nutzer mit einer zentralen Rechnereinrichtung und fordert ein elektronisches Ticket an. Dabei wird die Geräte-Identifikationsnummer der Kommunikationseinrichtung, die sich auf einer entsprechenden Chipkarte innerhalb der Kommunikationseinrichtung befindet, mit an die zentrale Rechnereinrichtung übertragen. In der zentralen Rechnereinrichtung wird ein mit der Geräte-Identifikationsnummer verknüpftes elektronisches Ticket erzeugt. Diese Daten werden anschließend an ein Lesegerät übertragen und optional als Quittung auch auf die Kommunikationseinrichtung. Das Lesegerät stellt bei dieser bekannten Lösung eine Kontrolleinrichtung zum Kontrollieren des elektronischen Tickets dar.

Um mit diesem Lesegerät kommunizieren zu können, ist in der mobilen Kommunikationseinrichtung ein mit dieser körperlich fest verbundener Sender vorgesehen, der in Form eines Transponders ausgestaltet ist. Sobald die Kommunikationseinrichtung in die Nähe des Lesegeräts gehalten wird, wird von dem Lesegerät eine Strahlung ausgesandt, die den Transponder aktiviert. Der Transponder reagiert auf diese Aktivierung seinerseits ebenfalls mit der Aussendung einer Strahlung. Bei der bekannten Lösung enthält diese Strahlung die Geräte-Identifikationsnummer, die an das Lesegerät übertragen wird.

Im Lesegerät wird die Geräte-Identifikationsnummer mit den dort abgelegten elektronischen Tickets, die ja ebenfalls mit Geräte-Identifikationsnummern verknüpft sind, verglichen. Sobald eine Überschneidung der Geräte-Identifikationsnummern festgestellt wird, weiß das Lesegerät beziehungsweise die Kontrolleinrichtung, dass für den Nutzer der Kommunikationseinrichtung ein gültiges elektronisches Ticket vorliegt.

Diese bekannte Lösung vereinigt in der mobilen Kommunikationseinrichtung zwei Kommunikationsmodule. Ein erstes Kommunikationsmodul dient dem eigentlichen bestimmungsgemäßen Gebrauch der Kommunikationseinrichtung, im vorliegenden Beispiel etwa dem Telefonieren, wenn es sich bei der Kommunikationseinrichtung um ein Mobiltelefon handelt. Ein zweites Kommunikationsmodul umfasst den Sender beziehungsweise Transponder, mittels dessen eine ortsnahe Kommunikation mit einem Lesegerät durchgeführt wird.

Auch wenn dieses bekannte Abwicklungssystem zur Bereitstellung und Kontrolle eines elektronischen Tickets bereits eine Reihe von Vorteilen aufweist, existieren immer noch verschiedene Nachteile.

Zum Beispiel ist der Sender fest mit der Kommunikationseinrichtung verbunden und damit an diese gebunden. Das bedeutet, dass der Nutzer bei der Auswahl seiner Kommunikationseinrichtungen beschränkt ist. Zur Kontrolle des elektronischen Tickets kann nur diejenige Kommunikationseinrichtung verwendet werden, über die das elektronische Ticket auch tatsächlich bestellt worden ist. Weiterhin erfolgt die Kommunikation der Kommunikationseinrichtung mit dem Lesegerät über den Sender nur unidirektional, das heißt von der Kommunikationseinrichtung hin zum Lesegerät. Damit ist die bekannte Lösung nur für wenig komplexe Anwendungsfälle einsetzbar. Darüber hinaus werden über den Sender nur gerätespezifische Informationen übertragen. Schließlich spielt der Nutzer bei der Kontrolle des elektronischen Tickets, das heißt bei der Kommunikation zwischen Kommunikationseinrichtung und Lesegerät über den Sender, keine aktive Rolle.

Ausgehend von dem genannten Stand der Technik liegt der vorliegenden Erfindung die Aufgabe zugrunde, Lösungen anzugeben, die die zuvor beschriebenen Nachteile überwinden. Insbesondere soll es ermöglicht werden, dass der Nutzer zu jedem Zeitpunkt der Kommunikation eine aktive Rolle im Kommunikationsprozess übernehmen kann.

Diese Aufgabe wird erfindungsgemäß gelöst durch die Chipkarte mit den Merkmalen gemäß dem unabhängigen Patentanspruch 1, die Kommunikationseinrichtung mit den Merkmalen gemäß dem unabhängigen Patentanspruch 7 sowie die Verfahren zum Datenmanagement nutzerspezifischer Daten mit den Merkmalen gemäß den unabhängigen Patentansprüchen 12 und 13. Weitere Vorteile, Merkmale und Details der Erfindung ergeben sich aus den Unteransprüchen, der Beschreibung sowie den Zeichnungen. Merkmale und Details die im Zusammenhang mit der erfindungsgemäßen Chipkarte beschrieben sind, gelten dabei selbstverständlich auch im Zusammenhang mit der erfindungsgemäßen Kommunikationseinrichtung sowie den erfindungsgemäßen Verfahren. Merkmale und Details die im Zusammenhang mit der erfindungsgemäßen Kommunikationseinrichtung beschrieben sind, gelten dabei selbstverständlich auch im Zusammenhang mit der erfindungsgemäßen Chipkarte sowie den erfindungsgemäßen Verfahren. Schließlich gelten Merkmale und Details, die im Zusammenhang mit den erfindungsgemäßen Verfahren beschrieben sind, selbstverständlich auch im Zusammenhang mit der erfindungsgemäßen Kommunikationseinrichtung sowie der erfindungsgemäßen Chipkarte.

Die vorliegende Erfindung vereinigt in ihren verschiedenen Erfindungsaspekten den Grundgedanken, dass eine Kommunikation über zwei Kommunikationsmodule erfolgen kann. Mittels des ersten Kommunikationsmoduls findet der eigentliche, originäre bestimmungsgemäße Gebrauch der Kommunikationseinrichtung in einem Kommunikationsnetz statt. Mittels eines zweiten Kommunikationsmoduls ist eine ortsnahe Kommunikation mit einer Sende- und/oder Empfangseinrichtung möglich. Dazu weist dieses zweite Kommunikationsmodul wenigstens eine Einrichtung zur Nahfeldkommunikation auf, die im weiteren Verlauf der Beschreibung im Detail erläutert wird.

Gemäß dem ersten Aspekt der Erfindung wird eine Chipkarte für eine, insbesondere mobile, Kommunikationseinrichtung bereitgestellt, die die Merkmale des unabhängigen Patentanspruchs 1 aufweist.

Demgemäß besteht die Chipkarte zunächst aus wenigstens einer Prozessoreinheit und wenigstens einer Speichereinrichtung zum zumindest zeitweiligen Speichern von Kommunikationsnetzbetreiber-spezifischen Daten. Diese Bestandteile werden als ein erstes Kommunikationsmodul bezeichnet, mittels dessen die eigentliche, originäre bestimmungsgemäße Kommunikation einer Kommunikationseinrichtung, in der sich die Chipkarte befindet, durchführbar ist.

Auf der Chipkarte stehen beispielsweise Kommunikationsnetzbetreiber-spezifische Informationen, wie Rufnummern, Identifikationsnummern und dergleichen, durch die die Kommunikation im Kommunikationsnetz überhaupt erst stattfinden kann. Da mittels einer solchen Chipkarte auch Rechenoperationen durchgeführt werden müssen, wie beispielsweise im Zusammenhang mit der Identifikation eines Nutzers, Abrechnungsmodalitäten und dergleichen, verfügt die Chipkarte über die wenigstens eine Prozessoreinheit. Zusätzlich ist wenigstens eine Speichereinrichtung vorgesehen, wobei je nach Ausgestaltung der Chipkarte auch zwei oder mehr Festspeichereinrichtungen und/oder flüchtige Speichereinrichtungen vorgesehen sein können. Die Verbindung der einzelnen Bestandteile kann über ein geeignetes Bussystem erfolgen. Derartige Chipkarten sind aus dem Stand der Technik bekannt, so dass sich eine weitergehende Detailbeschreibung an dieser Stelle erübrigt.

Erfindungsgemäß ist auf der Chipkarte nunmehr auch wenigstens eine Einrichtung zur Nahfeldkommunikation implementiert. Dies könnte man als ein zweites Kommunikationsmodul bezeichnen, mittels dessen eine ortsnahe Kommunikation mit einem externen Gerät, beispielsweise einer externen Sende- und/oder Empfangseinrichtung möglich und durchführbar ist.

Mit der erfindungsgemäßen Chipkarte wird erstmals die Möglichkeit geschaffen, eine solche Einrichtung zur Nahfeldkommunikation auf einer als Mittel zur Zugangsberechtigung für die Teilnahme in einem Kommunikationsnetz ausgebildeten Chipkarte zu implementieren. Das hat den enormen Vorteil, dass eine Nahfeldkommunikation nunmehr unabhängig von der eigentlichen Kommunikationseinrichtung durchgeführt werden kann. Da sich die Einrichtung zur Nahfeldkommunikation auf der Chipkarte befindet, kann diese problemlos auch in andere Kommunikationseinrichtungen eingelegt werden. Eine ortsnahe Kommunikation ist dann stets mit derjenigen Kommunikationseinrichtung durchführbar, in der sich die erfindungsgemäße Chipkarte gerade befindet.

Mit der vorliegenden Erfindung ist es nunmehr möglich geworden, die beiden weiter oben beschriebenen Kommunikationsmodule auf einer einzigen Chipkarte zu vereinigen.

Mittels der erfindungsgemäßen Chipkarte wird ein berührungsfreier Zugriff auf eine externe Einrichtung, beispielsweise eine Sende- und/oder Empfangseinrichtung möglich, wobei die Realisierung über die Einrichtung zur Nahfeldkommunikation erfolgt, die auf der Chipkarte integriert ist.

Einrichtungen zur Nahfeldkommunikation an sich sind bereits aus dem Stand der Technik bekannt und beispielsweise in der ISO 18092, ECMA 340 und ETSI TS 102 90 spezifiziert. Bei der Nahfeldkommunikation (NFC Near-Field-Communication) handelt es sich generell um eine drahtlose Kommunikationstechnologie für Datenverbindungen über kurze Strecken, das heißt zur ortsnahen Kommunikation. Zwei mit entsprechenden Einrichtungen zur Nahfeldkommunikation ausgerüstete Endeinrichtungen werden kurz aneinander gehalten und identifizieren sich über die Einrichtung zur Nahfeldkommunikation. Nach erfolgreicher Identifizierung kann ein Datenaustausch stattfinden.

Die Abstände für eine solche ortsnahe Kommunikation bewegen sich vorteilhaft im Bereich von einigen Zentimetern bis zu einigen Metern, vorteilhaft in einem Bereich zwischen 10 Zentimetern und einem Meter, ganz besonders bevorzugt in einem Bereich zwischen 30 und 60 Zentimetern. Natürlich ist die Erfindung nicht auf bestimmte Abstände beschränkt. Diese ergeben sich vielmehr aus dem Einsatzgebiet, auf dem eine Nahfeldkommunikation stattfinden soll.

Die vorliegende Erfindung ist des Weiteren nicht auf bestimmte Ausgestaltungsformen für die Einrichtung zur Nahfeldkommunikation beschränkt. Nachfolgend wird hierzu ein vorteilhaftes Ausführungsbeispiel beschrieben, ohne das die Erfindung auf dieses konkrete Beispiel beschränkt wäre.

Vorteilhaft kann wenigstens eine Einrichtung zur Nahfeldkommunikation als RFID-Element (Radio Frequency Identification) ausgebildet sein. RFID ist ein Verfahren, mittels dessen Daten berührungslos übertragen, gelesen und gespeichert werden können. Die Daten werden auf einem RFID-Chip gespeichert. Das Auslesen beziehungsweise Beschreiben des Speichers erfolgt über Radiowellen. Die Entfernung, über die ein solcher RFID-Chip ausgelesen werden kann, hängt von dessen Ausführung, dem benutzen Frequenzband, der Sendestärke, von Umwelteinflüssen und dergleichen ab.

Vorzugsweise weist die wenigstens eine Einrichtung zur Nahfeldkommunikation, beispielsweise das RFID-Element, einen Transponder zum Senden und/oder Empfangen von Daten auf. Ein Transponder besteht generell aus einer Prozessoreinheit und einer Antenne. Optional kann dieser auch über eine eigene Energiequelle verfügen. In diesem Fall spricht man von einem aktiven Transponder. Ein Transponder ohne eigene Energiequelle wird als passiver Transponder bezeichnet.

Aktive Transponder befinden sich üblicherweise in einer Ruhestellung, in der sie keine Signale aussenden. Erst wenn sie ein bestimmtes Aktivierungssignal empfangen, aktiviert sich deren Sender. Aktive Transponder besitzen im Vergleich zu passiven Transpondern eine größere Sendereichweite.

Passive Transponder verfügen über keine eigene Energiequelle. Sie beziehen ihre Energie zur Übertragung von Informationen aus den empfangenen Funkwellen. Passive Transponder verfügen im Vergleich zu den aktiven Transpondern über eine geringere Reichweite.

Bevorzugt ist der Transponder als passiver Transponder ausgebildet. Aufgrund der geringen Reichweite ist nämlich auch ein Schutz vor unberechtigten Zugriffen beziehungsweise Abgriffen gewährleistet. Dies ist bei einigen Applikationen, von denen einige im weiteren Verlauf näher erläutert werden, von besonderer Bedeutung.

Die Chipkarte weist einen Connector zur Verbindung mit einer externen Sende- und/oder Empfangseinrichtung auf. Als Connector ist generell ein Verbindungselement oder eine Verbindungsfunktionalität zu verstehen, mittels derer eine (Kommunikations-)Verbindung zu einer anderen Einrichtung hergestellt und unterhalten werden kann. Je nach Ausgestaltung kann der Connector softwarebasiert oder hardwaremäßig vorliegen. Ein Connector hat eine Reihe von Funktionen innerhalb des Kommunikationsprozesses.

Der Connector weist Mittel zum Verschlüsseln und/oder Entschlüsseln von Daten auf. Zudem weist der Connector Mittel zum Authentifizieren auf. Mit dem auf der Chipkarte integrierten Connector, der vorteilhaft softwarebasiert als so genannter "Soft-Connector" ausgebildet ist, lassen sich insbesondere alle bei der Übertragung von Daten erforderlichen Sicherungs- und Verschlüsselungsprozeduren vornehmen.

Eine Authentifizierungsprozedur, bei der es sich insbesondere um die Identifizierung einer dahinter stehenden Kommunikationseinrichtung beziehungsweise eines dahter stehenden Nutzers handelt, kann beispielsweise mittels einer bestimmten, auf der Chipkarte hinterlegten Identifikationsnummer erfolgen. Hierbei kann es sich beispielsweise um diejenige Identifikationsnummer handeln, die der Nutzer auch beim eigentlichen, originären bestimmungsgemäßen Gebrauch seiner Kommunikationseinrichtung, beispielsweise beim Telefonieren in einem Telekommunikationsnetz, benötigt.

Natürlich sind auch andere Datentypen und Datenquellen denkbar, mittels derer eine Authentifizierung beziehungsweise Identifizierung durchgeführt werden kann. Hierbei kann es sich beispielsweise um so genannte nutzerspezifische Daten handeln. Unter "nutzerspezifischen Daten" sollen generell solche Daten verstanden werden, die auf den Nutzer bezogen sind, diesen charakterisieren, Auskünfte über diesen geben, persönliche Daten umfassen, und dergleichen. Nicht ausschließliche Beispiele hierzu werden im weiteren Verlauf der Beschreibung näher erläutert.

Die Chipkarte weist wenigstens eine Speichereinrichtung auf, die der wenigstens einen Einrichtung zur Nahfeldkommunikation zugeordnet ist, wobei in der Speichereinrichtung zumindest zeitweilig nutzerspezifische Daten abgelegt sind. Ebenso ist es vorteilhaft, wenn die Speichereinrichtung mit den nutzerspezifischen Daten dem wie vorstehend beschriebenen Connector zugeordnet ist. Die Speichereinrichtung, beziehungsweise die darin abgespeicherten nutzerspezifischen Daten stellen somit eine Zusatzapplikation auf der Chipkarte dar.

Sofern auf der Chipkarte keine derartige Speichereinrichtung vorgesehen ist, weist diese eine Schnittstelle zu einer Speichereinrichtung auf, in der zumindest zeitweilig nutzerspezifische Daten abgelegt sind.

In vorteilhafter Ausgestaltung können in der Speichereinrichtung nutzerspezifische Daten in Form einer elektronischen Gesundheitskarte abgelegt sein. Dies stellt eine besonders vorteilhafte Ausgestaltung beziehungsweise Anwendung der vorliegenden Erfindung dar, so dass im weiteren Verlauf des Öfteren auf dieses konkrete Beispiel Bezug genommen wird. Es versteht sich jedoch von selbst, dass die vorliegende Erfindung nicht auf dieses konkrete Beispiel beschränkt ist.

Derzeit sind Bestrebungen im Gange, in der Gesundheitsversorgung so genannte elektronische Gesundheitskarten beziehungsweise elektronische Patientenakten einzuführen. Diese Gesundheitskarten beziehungsweise Patientenakten sollen die Krankengeschichte eines Patienten, verschiedene Behandlungen, Befunddaten, die diesem verabreichten Medikamente, eventuelle Medikamenten-Unverträglichkeiten und dergleichen beinhalten. Ziel ist es, sämtliche Ergebnisse von Behandlungen und Untersuchungen in einer einzigen elektronischen Patientenakte zusammenzufassen. Weiterhin sollen in der elektronischen Gesundheitskarte beziehungsweise der elektronischen Patientenakte Stammdaten des Patienten, Notfalldaten, Vitaldaten und Anamnesedaten des Patienten, diesbezügliche Prozessdaten, elektronische Rezepte und dergleichen abgelegt werden. Dazu ist bisher angedacht gewesen, diese Form der Gesundheitskarten in Form so genannter Smart-Cards an die Patienten zu verteilen. Das hat unter anderem jedoch den Nachteil, dass der Patient noch eine weitere Karte mit sich herumtragen muss.

Mit der erfindungsgemäßen Chipkarte wird es nunmehr möglich, diese elektronische Gesundheitskarte direkt auf der Chipkarte zu implementieren. Der Patient benötigt dann nur noch seine Kommunikationseinrichtung mit der darin ohnehin erforderlichen Chipkarte, auf der dann diese zusätzliche Applikation implementiert ist. Dies ermöglicht zusätzlich auch noch weitergehende Verbesserungen bei der Kommunikation, wie insbesondere auch im Zusammenhang mit den weiteren Erfindungsaspekten beschrieben wird.

Da es sich bei den Daten auf den Gesundheitskarten um hochsensible Daten handelt, sind die Sicherheitsanforderungen an die Übertragung enorm. Diesen Sicherheitsanforderungen kann mit der vorliegenden Erfindung Rechnung getragen werden. Die Übertragung der Daten auf eine bei einem Arzt, Apotheker oder dergleichen befindliche Sende- und/oder Empfangseinrichtung wird, wie weiter unten noch detailliert beschrieben wird, über die Einrichtung zur Nahfeldkommunikation und/oder den Connector vollzogen. Durch die ortsnahe Kommunikation, die bei Verwendung eines passiven Transponders beispielsweise auf einen Abstand zwischen den Geräten zwischen 30 und 50 cm beschränkt sein kann, wird der unberechtigte Zugriff von außen auf die übertragenen Daten verhindert.

Zur Authentifizierung des Nutzers können neben den oben schon angesprochenen Möglichkeiten beispielsweise auch Bestandteile der elektronischen Gesundheitskarte genutzt werden, die in der der Einrichtung zur Nahfeldkommunikation und/oder dem Connector zugeordneten Speichereinrichtung abgelegt sein können. Dies funktioniert natürlich auch mit jeder anderen Form von nutzerspezifischen Daten.

Vorteilhaft kann die Chipkarte als SIM-Karte (Subscriber Identity Module) für ein Mobiltelefon ausgebildet sein. Allerdings ist die Erfindung nicht auf Kommunikationseinrichtungen in Form von Mobiltelefonen beschränkt, so dass die Chipkarte auch als Zugangskarte für andere Kommunikationseinrichtungen, wie beispielsweise Festnetztelefone, Computer, insbesondere tragbare Computer wie Laptops oder dergleichen, Personal Digital Assistants (PDAs) und dergleichen ausgebildet sein kann.

In einem bevorzugten konkreten Ausführungsbeispiel kann die Chipkarte neben den eigentlichen Funktionalitäten zum eigentlichen, originären bestimmungsgemäßen Gebrauch der Kommunikationseinrichtung (zum Beispiel Datenübertragung, Telefonieren oder dergleichen) in einem zu bisherigen Chipkarten dann erweiterten Speicher auch die Sicherungsfunktionen eines (Soft-)Connectors enthalten. Zusätzlich kann diese Chipkarte die Inhalte nutzerspezifischer Daten, beispielsweise einer elektronischen Gesundheitskarte tragen.

Um eine gezielte Kommunikation der Kommunikationseinrichtung, in welcher die Chipkarte implementiert ist, mit einem externen Gerät zu ermöglichen, sind auf diesem Endgerät und auf der Chipkarte vorteilhaft Fähigkeiten zur Nahfeldkommunikation implementiert. Dies ermöglicht die Übertragung ausgewählter Datensätze auf das externe Endgerät, das dann mit einem entsprechenden Empfänger ausgestattet ist, wie im weiteren Verlauf der Beschreibung näher erläutert wird.

Gemäß einem nächsten Aspekt der Erfindung wird eine Kommunikationseinrichtung bereitgestellt, die erfindungsgemäß dadurch gekennzeichnet ist, dass diese eine wie vorstehend beschriebene erfindungsgemäße Chipkarte aufweist.

Gemäß einer zweiten Alternative wird eine Kommunikationseinrichtung, insbesondere eine mobile Kommunikationseinrichtung, bereitgestellt, mit wenigstens einer Prozessoreinheit sowie wenigstens einer Speichereinrichtung zum zumindest zeitweiligen Speichern Kommunikationsnetzbetreiber-spezifischer Daten. Dabei kann es sich um eine Art erstes Kommunikationsmodul handeln, mittels dessen der eigentliche, originäre bestimmungsgemäße Gebrauch der Kommunikationseinrichtung (zum Beispiel das Telefonieren, ein Datenaustausch oder dergleichen) durchgeführt wird. Weiterhin sind wenigstens eine Einrichtung zur Nahfeldkommunikation in Form eines passiven Transponders zum Senden und/oder Empfangen von Daten, sowie ein Connector zur Verbindung mit einer externen Sende- und/oder Empfangseinrichtung vorgesehen. Bei der Einrichtung zur Nahfeldkommunikation kann es sich um ein zweites Kommunikationsmodul handeln, mittels dessen eine ortsnahe Kommunikation durchgeführt wird. Die Kommunikationseinrichtung verfügt somit über zwei unterschiedliche Wege zur Kommunikation.

Diese Kommunikationseinrichtung ist dadurch gekennzeichnet, dass wenigstens eine Speichereinrichtung vorgesehen ist, die der wenigstens einen Einrichtung zur Nahfeldkommunikation zugeordnet ist und dass in der Speichereinrichtung zumindest zeitweilig nutzerspezifische Daten abgelegt sind.

Der Unterschied zwischen diesen beiden Alternativen besteht darin, dass im erstgenannten Fall alle beschriebenen Funktionalitäten auf der Chipkarte implementiert sind. Im zweiten Fall müssen die Funktionalitäten nicht auf der Chipkarte implementiert sein. Vielmehr ist hier lediglich erforderlich, dass die Funktionalitäten irgendwo und irgendwie in der Kommunikationseinrichtung vorgesehen sind.

In der zweiten Alternative kann der Connector beispielsweise in einer Speichereinrichtung der Kommunikationseinrichtung vorgesehen sein, beispielsweise dergestalt, dass dieser in Form von Software in der Kommunikationseinrichtung implementiert ist.

Wie im weiteren Verlauf der Beschreibung verdeutlicht wird, kann eine solche Kommunikationseinrichtung besonders vorteilhaft als (Daten-)Terminal für eine elektronische Patientenakte verwendet werden.

Die Kommunikationseinrichtung kann somit zur gesicherten Übertragung von Daten, insbesondere von persönlichen Daten, über mehrere Kommunikationsmodule verwendet werden. Wenn die Kommunikationseinrichtung als Telefon und das Kommunikationsnetz als Telekommunikationsnetz ausgebildet ist, kann eine Form der Übertragung über die eigentliche Telefonfunktionalität erfolgen, etwa über GSM, GPRS, UMTS oder dergleichen. Hierbei kann es sich dann um ein wie weiter oben erwähntes erstes Kommunikationsmodul handeln. Eine weitere Form, nämlich die einer ortsnahen Kommunikation, kann über die Einrichtung zur Nahfeldkommunikation realisiert werden, wobei es sich dann um ein wie weiter oben beschriebenes zweites Kommunikationsmodul handeln kann.

Wenn die Kommunikationseinrichtung gemäß der zweiten Alternative ausgestaltet ist, kann wenigstens eine Einrichtung zur Nahfeldkommunikation als RFID-Element (Radio Frequency Identification) ausgebildet sein.

Die wenigstens eine Einrichtung zur Nahfeldkommunikation weist einen Transponder zum Senden und/oder Empfangen von Daten auf, der als passiver Transponder ausgebildet ist. Bezüglich dieser Merkmale wird auf die vorstehenden Ausführungen in Bezug auf die erfindungsgemäße Chipkarte Bezug genommen und hiermit verwiesen.

In weiterer Ausgestaltung kann die Kommunikationseinrichtung zum bidirektionalen Austausch von Daten mit einer externen Sende- und/oder Empfangseinrichtung ausgebildet sein.

Vorteilhaft kann der Connector Mittel zum Verschlüsseln und/oder Entschlüsseln von Daten aufweisen. Alternativ oder zusätzlich ist auch möglich, dass der Connector Mittel zum Authentifizieren aufweist. Auch bezüglich dieser Merkmale wird auf die vorstehenden Ausführungen in Bezug auf die erfindungsgemäße Chipkarte Bezug genommen und hiermit verwiesen.

In weiterer Ausgestaltung kann vorgesehen sein, dass in der wenigstens einen Speichereinrichtung, die der wenigstens einen Einrichtung zur Nahfeldkommunikation zugeordnet ist, nutzerspezifische Daten in Form einer elektronischen Gesundheitskarte abgelegt sind. Natürlich ist die Erfindung auch auf andere Gebiete und Arten nutzerspezifischer Daten anwendbar. Zu denken ist hier beispielsweise an den Fitness- und Wellness-Bereich. So lassen sich beispielsweise auch bequem Trainingsdaten, beispielsweise für Rabattieraktionen, für die Optimierung des Trainings oder dergleichen ablegen. Selbstverständlich können auch nutzerspezifische Daten abgelegt werden, die gar nichts mit dem Gesundheitsbereich, dem Fitness- oder Wellness-Bereich zu tun haben.

Vorteilhaft kann die Kommunikationseinrichtung eine Anzeigeeinrichtung zur Darstellung von Informationen aufweisen. Hierbei handelt es sich vorzugsweise um ein - insbesondere ausreichend großes - Display, auf dem die Informationen dargestellt werden können.

In weiterer Ausgestaltung kann wenigstens ein Sensorelement zur Erfassung nutzerspezifischer Daten vorgesehen sein. Beispielsweise kann das wenigstens eine Sensorelement in der Kommunikationseinrichtung integriert sein. Alternativ oder zusätzlich kann vorgesehen sein, dass die Kommunikationseinrichtung wenigstens eine Schnittstelle zu einem Sensorelement zur Erfassung nutzerspezifischer Daten aufweist. Über diese Schnittstelle kann die Kommunikationseinrichtung lösbar oder fest mit einem externen Sensorelement verbunden werden. Dieses Sensorelement ist als im Vergleich zur Kommunikationseinrichtung externes Bauteil ausgebildet.

Der Einsatz derartiger Sensorelemente soll nachfolgend anhand einiger nicht ausschließlicher Beispiele erläutert werden, wobei es sich bei den nutzerspezifischen Daten um eine elektronische Gesundheitskarte handeln soll. Beispielsweise ist es möglich, mit derartigen Sensorelementen Vitalfunktionen, physiologische Werte und dergleichen eines Menschen zu messen und diese drahtlos oder leitungsgebunden an die Kommunikationseinrichtung zu übertragen. Die auf dieses Weise übertragenen Messwerte können in der Kommunikationseinrichtung abgespeichert und/oder weiterverarbeitet und/oder an externe Sende- und/oder Empfangseinrichtungen weitergeschickt werden. Beispielsweise ist es möglich, mittels derartiger Sensorelemente, die oftmals bequem am Körper des Menschen getragen werden können, Vitalfunktionen wie den Blutsauerstoffwert, die Temperatur, EKG-Werte, den Blutdruck und dergleichen zu messen.

Derartige Sensorelemente in Verbindung mit Kommunikationseinrichtungen an sich sind bereits aus dem Stand der Technik bekannt. So ist etwa aus der US 2002/0148477 A1, deren Offenbarungsgehalt insoweit in die Beschreibung der vorliegenden Erfindung mit einbezogen wird, ein Mobiltelefon bekannt, an dem sich eine Reihe von Sensorelementen befinden. Diese Sensorelemente erfassen physiologische Messwerte des Nutzers. Von dem Mobiltelefon werden die Messwerte an eine zentrale Rechnereinrichtung übertragen und dort ausgewertet. Die Ergebnisse werden in einer der zentralen Rechnereinrichtung zugeordneten Datenbank abgelegt und ebenfalls auf das Mobiltelefon des Nutzers zurück übertragen.

In der US 2004/0006492 A1, deren Offenbarungsgehalt insoweit ebenfalls in die Beschreibung der vorliegenden Erfindung mit einbezogen wird, ist ein elektronisches Gesundheits-Überwachungssystem beschrieben. Der Nutzer des Systems trägt ein Sensorelement zur Erfassung physiologischer Werte. Das Sensorelement ist mit einem Mobiltelefon verbunden. In einer zentralen Rechnereinheit sind Referenzwerte zu dem zu messenden Wert des Nutzers abgelegt. Zusätzlich können damit andere Kontaktdaten verknüpft sein, wie etwa die Adresse eines Arztes, eines Krankenhauses, weitere nutzerspezifische Daten und dergleichen. Wenn eine Abnormität erkannt wird, werden von der zentralen Rechnereinrichtung Nachrichten an das Mobiltelefon und an die entsprechenden Kontaktadressen verschickt. Die dem Nutzer in der zentralen Rechnereinrichtung zugeordneten Daten können über das Internet erzeugt und bearbeitet werden.

Ein Sensorelement, das in der Kommunikationseinrichtung integriert ist, kann beispielsweise durch eine Kamera gebildet sein. Eine solche Kamera, etwa eine Fotokamera oder eine Videokamera, kann den Nutzer von außen aufnehmen, beispielsweise seinen Gesichtsausdruck, seine Bewegungen, seine Augen und dergleichen. Aus diesen äußerlichen Werten ist es ebenfalls möglich, Rückschlüsse über den aktuellen körperlichen Zustand des Nutzers zu ziehen.

In weiterer Ausgestaltung kann die Kommunikationseinrichtung als Mobiltelefon ausgebildet sein. Natürlich ist die Erfindung nicht auf diese Ausgestaltungsvariante beschränkt. So kann die Kommunikationseinrichtung beispielsweise auch als Festnetztelefon, als Computer, insbesondere als tragbarer Computer (Laptop) oder TouchPad-PC, als PDA (Personal Digital Assistant), als so genanntes Smart-Phone oder dergleichen ausgebildet sein. Wichtig ist lediglich, dass die Kommunikationseinrichtung geeignet ist, um eine wie weiter oben beschriebene Chipkarte gemäß der ersten Alternative, oder aber die gemäß der zweiten Alternative genannten Funktionalitäten aufzunehmen.

Gemäß einem weiteren Aspekt wird ein Kommunikationssystem bereitgestellt. Ein solches Kommunikationssystem weist als grundlegendes Merkmal zunächst wenigstens eine Steuereinrichtung auf. Diese Steuereinrichtung weist wenigstens eine Schnittstelle zu wenigstens einem weiteren Gerät auf. Die Steuereinrichtung ist zur Kommunikation, zum Datenaustausch und dergleichen mit anderen Geräten ausgebildet.

Die Kommunikation, der Datenaustausch und dergleichen erfolgt über ein Kommunikationsnetz. Das Kommunikationssystem kann dabei fester Bestandteil eines Kommunikationsnetzes sein. Ebenso ist es möglich, dass das Kommunikationssystem als vom Kommunikationsnetz zunächst unabhängiges System vorgesehen ist, wobei nur für die Kommunikation, den Datenaustausch und dergleichen auf das Kommunikationsnetz zurückgegriffen wird.

Das Kommunikationssystem kann dem Kommunikationsnetzbetreiber oder aber auch dritten Instanzen zugeordnet sein und von diesen angeboten und betrieben werden.

Die Steuereinrichtung kann wenigstens eine Schnittstelle zu wenigstens einer Kommunikationseinrichtung aufweisen. Hierbei kann es sich insbesondere um eine wie vorstehend beschriebene erfindungsgemäße Kommunikationseinrichtung handeln. Je nach Ausgestaltung des Kommunikationssystems kann die Kommunikationseinrichtung als Bestandteil des Kommunikationssystems oder als zu diesem unabhängige Einrichtung angesehen werden.

Weiterhin kann das Kommunikationssystem wenigstens eine Schnittstelle zu einer Sende und/oder Empfangseinrichtung aufweisen. Je nach Ausgestaltung des Kommunikationssystems kann die Sende- und/oder Empfangseinrichtung als Bestandteil des Kommunikationssystems oder als zu diesem unabhängige Einrichtung angesehen werden.

Durch ein solches Kommunikationssystem wird insbesondere auch eine berührungslose Verbindung zwischen der Sende- und/oder Empfangseinrichtung und der Kommunikationseinrichtung möglich. Diese Verbindung erfolgt über die Einrichtung zur Nahfeldkommunikation, die zumindest in der Kommunikationseinrichtung vorgesehen ist.

Das Kommunikationssystem weist insbesondere Mittel zur Durchführung des weiter unten beschriebenen erfindungsgemäßen Verfahrens zum Datenmanagement nutzerspezifischer Daten auf.

Nachfolgend wird eine Sende- und/oder Empfangseinrichtung in größerem Detail beschrieben.

Bei der Sende- und/oder Empfangseinrichtung kann es sich beispielsweise um eine Schreib- und/oder Leseeinrichtung, kurz um ein Lesegerät handeln.

Vorteilhaft können die Kommunikationseinrichtung(en) und die Sende- und/oder Empfangseinrichtung(en) zum bidirektionalen Austausch von Daten ausgebildet sein.

Vorzugsweise weist auch die Sende- und/oder Empfangseinrichtung einen Connector zur Verbindung mit einer externen Einrichtung auf. Dieser Connector kann vorteilhaft wie die weiter oben beschriebenen Connectoren ausgebildet sein, so dass diesbezüglich auch auf die entsprechenden Ausführungen Bezug genommen und verwiesen wird. Insbesondere kann der Connector Mittel zum Verschlüsseln und/oder Entschlüsseln von Daten aufweisen. Alternativ oder zusätzlich ist denkbar, dass der Connector Mittel zum Authentifizieren aufweist.

Wenn vom Connector der Kommunikationseinrichtung oder der Einrichtung zur Nahfeldkommunikation beispielsweise verschlüsselte Daten oder Informationen auf den Connector der Sende- und/oder Empfangseinrichtung übertragen werden, kann dieser Connector die empfangenen Daten entschlüsseln und einer weiteren Verarbeitung zuführen. Auf gleiche Weise können auch Daten über den Connector der Sende- und/oder Empfangseinrichtung auf die Kommunikationseinrichtung übertragen werden.

Vorteilhaft kann die Sende- und/oder Empfangseinrichtung zumindest zeitweilig mit einer Datenverarbeitungseinrichtung verbunden sein. Dabei können die Sende- und/oder Empfangseinrichtung sowie die Datenverarbeitungseinrichtung entweder in Form eines einzigen Bauteils, oder aber in Form unabhängiger Bauteile vorliegen, die dann zur Kommunikation miteinander verbunden werden. Bei der Datenverarbeitungseinrichtung kann es sich beispielsweise um einen mobilen oder stationären Computer, etwa einen PC, einen Laptop, einen TouchPad-PC oder dergleichen handeln.

In weiterer Ausgestaltung kann die Steuereinrichtung des Kommunikationssystems wenigstens eine Schnittstelle zu einer zentralen Rechnereinrichtung aufweisen.

Die zentrale Rechnereinrichtung kann aus einer oder mehreren Rechnereinheit(en), bestehen, wobei auf der zentralen Rechnereinrichtung insbesondere eine Datenbank vorgesehen ist, in welcher nutzerspezifische Daten abgelegt sind. Über die Schnittstelle kann somit ein Zugriff auf die Datenbank erfolgen. Je nach Ausgestaltung des Kommunikationssystems kann die Steuereinrichtung Bestandteil der zentralen Rechnereinrichtung sein, oder aber als eigenständige, separate Instanz vorliegen, die mit der zentralen Rechnereinrichtung zumindest zeitweilig kommuniziert.

Je nach Ausgestaltung kann die Rechnereinrichtung und die darauf liegende Datenbank vom Kommunikationssystembetreiber, beispielsweise vom Kommunikationsnetzbetreiber bereitgestellt und gepflegt werden. Es ist jedoch auch denkbar, dass die zentrale Rechnereinrichtung und die Datenbank einer anderen Instanz zugeordnet sind, und dass diese lediglich zeitweilig Bestandteil des Kommunikationssystems, beispielsweise des Kommunikationsnetzes wird. Ebenso ist es natürlich auch denkbar, dass die Datenbank aus einer Anzahl von Unter-Datenbanken besteht.

Die Datenbank beziehungsweise die zentrale Rechnereinrichtung kann als Bestandteil des Kommunikationssystems oder als zu diesem unabhängige Einrichtung angesehen werden.

In der Datenbank sind nutzerspezifische Daten, wie sie weiter oben definiert worden sind, abgelegt.

Ganz besonders vorteilhaft können in der Datenbank nutzerspezifische Daten in Form einer elektronischen Patientenakte abgelegt sind. Das bedeutet, dass durch die Datenbank eine zentrale, digitale Patientenkartei erstellt werden kann, in der alle gesundheitsrelevanten Daten und Informationen eines Patienten zentral erfasst werden können. Bisher war es üblich, dass jeder Arzt seine eigenen Aufzeichnungen hatte, und dass diese Aufzeichnungen anderen Ärzten, Behörden und Institutionen, sofern sie nicht von dem Patienten mit den entsprechenden Informationen versorgt wurden, nicht zur Verfügung standen. Das ist sehr nachteilig, da hierdurch Untersuchungen mehrfach durchgeführt werden müssen, Informationen nicht zur Verfügung stehen, eventuelle Medikamenten-Unverträglichkeiten nicht erkannt werden, und dergleichen. Das die Patientendaten nunmehr auf einer einzigen zentralen Datenbank abgelegt sind hat den Vorteil, dass die Daten nicht verloren gehen und nunmehr - stets - in ihrer Gesamtheit zur Verfügung stehen. Bei entsprechender Dimensionierung der Datenbank ist es auch möglich, große Datenmengen pro Patient abzuspeichern. Das hat den Vorteil, dass auch Röntgenbilder, Fotos, Ultraschallbilder und dergleichen bequem in dieser Datenbank abgelegt werden können und danach zur Verfügung stehen.

Vorteilhaft ist vorgesehen, dass die wenigstens eine Kommunikationseinrichtung ein Kommunikationsmodul zur, insbesondere direkten, Kommunikation mit der zentralen Rechnereinrichtung aufweist. Hierbei kann es sich um das Kommunikationsmodul handeln, mit dem ohnehin die eigentliche, originäre bestimmungsgemäße Kommunikation durchgeführt wird, beispielsweise die SIM-Karte eines Mobiltelefons.

Diese Ausgestaltung hat den Vorteil, dass der Nutzer über seine Kommunikationseinrichtung jederzeit Zugriff auf die Datenbank und seine darauf befindlichen nutzerspezifischen Informationen hat. Beispielsweise hat der Nutzer so stets Zugriff auf seine gesamte elektronische Patientenakte. Insbesondere die großen Dateien können in der Datenbank abgelegt sein, so dass in der Speichereinrichtung der Kommunikationseinrichtung, die der Einrichtung zur Nahfeldkommunikation zugeordnet ist, nur geringe Datenmengen benötigt werden. Beispielsweise kann es im Falle einer Patientenakte ausreichend sein, wenn in der Speichereinrichtung der Kommunikationseinrichtung nur die Stammdaten der elektronischen Gesundheitskarte, medizinische Notfalldaten oder dergleichen abgelegt sind, mittels derer sich der Nutzer/Patient identifizieren kann.

In diesem Zusammenhang ist es beispielsweise denkbar, dass die nutzerspezifischen Daten, beispielsweise die elektronische Gesundheitskarte, auch über ein digitales Bild oder biometrische Daten des Nutzers/Patienten verfügen. Bei einer Kontaktaufnahme zwischen der Kommunikationseinrichtung und der Sende- und/oder Empfangseinrichtung werden dann die entsprechenden Informationen zur Identifizierung übertragen. Alle weiteren Informationen werden dann über die Datenbank zur Verfügung gestellt.

Beispielsweise kann vorgesehen sein, dass die Kommunikationseinrichtung eine ortsnahe Kommunikation mit der Sende- und/oder Empfangseinrichtung, und gleichzeitig eine Kommunikationsverbindung mit der Datenbank aufbaut. Wenn beide Verbindungen stehen, können die Informationen der Datenbank über die Kommunikationseinrichtung des Nutzers auf die Sende- und/oder Empfangseinrichtung und von dort möglicherweise auf eine angeschlossene Datenverarbeitungseinrichtung übertragen werden. Der Nutzer hat somit stets die volle Kontrolle über die Vorgänge, kann nur von ihm autorisierte Daten freigeben und ist stets aktiver Part im Kommunikationsprozess.

In weiterer Ausgestaltung kann vorgesehen sein, dass die wenigstens eine Sende- und/oder Empfangseinrichtung oder eine mit dieser verbundene Datenverarbeitungseinrichtung ein Kommunikationsmodul zur, insbesondere direkten, Kommunikation mit der zentralen Rechnereinrichtung aufweist.

In diesem Fall kann eine direkte Kommunikationsverbindung zwischen der Sende- und/oder Empfangseinrichtung beziehungsweise der Datenverarbeitungseinrichtung und der zentralen Rechnereinrichtung beziehungsweise der Datenbank hergestellt werden.

Wenn in einem solchen Fall die Authentifizierungsdaten von der Kommunikationseinrichtung auf die Sende- und/oder Empfangseinrichtung beziehungsweise die Datenverarbeitungseinrichtung übertragen worden sind, kann von dort ein direkter Zugriff auf die Datenbank erfolgen und die Informationen können direkt, ohne Umweg über die Kommunikationseinrichtung, auf der Sende- und/oder Empfangseinrichtung beziehungsweise der Datenverarbeitungseinrichtung bereitgestellt werden. Das ist insbesondere dann von Vorteil, wenn große Datenmengen übertragen werden sollen.

Außerdem ist es so möglich, dass auf Seiten der Sende- und/oder Empfangseinrichtung beziehungsweise der Datenverarbeitungseinrichtung Identifikationsdaten des Nutzers von der Datenbank herunter geladen und mit den über die ortsnahe Kommunikation übermittelten Authentifizierungsdaten verglichen werden. Hat der Nutzer zur Authentifizierung beispielsweise ein digitales Bild oder biometrische Daten übermittelt, könnten auch in der Datenbank ein digitales Bild oder entsprechende biometrische Daten des Nutzers hinterlegt sein, das/die dann auf die Sende- und/oder Empfangseinrichtung beziehungsweise eine damit verbundene Datenverarbeitungseinrichtung herunter geladen und mit dem übertragenen Bild beziehungsweise den biometrischen Daten verglichen werden kann/können. So ist beispielsweise eine eindeutige Identifizierung des Nutzers möglich, was insbesondere im Zusammenhang mit der elektronischen Patientenakte von großer Bedeutung ist.

Die Freigabe von Daten, die von der Datenbank auf die Sende- und/oder Empfangseinrichtung beziehungsweise eine daran angeschlossene Datenverarbeitungseinrichtung herunter geladen werden dürfen, erfolgt dann an den entsprechenden Geräten durch den Nutzer selbst, beispielsweise über die Eingabe einer PIN. Ebenso ist denkbar, dass die erforderliche Freigabe von Daten in denjenigen Daten enthalten ist, die mittels der ortsnahen Kommunikation von der Kommunikationseinrichtung auf die Sende- und/oder Empfangseinrichtung übertragen werden.

Gemäß einem anderen Beispiel kann vorgesehen sein, dass in der der Einrichtung zur Nahfeldkommunikation zugeordneten Speichereinrichtung Notfalldaten des Nutzers abgelegt sind. Hat dieser nun einen Unfall, kann das herbeigerufene Notfallpersonal auf diese Notfalldaten zugreifen. Über eine entsprechende Sende- und/oder Empfangseinrichtung wird die Einrichtung zur Nahfeldkommunikation, beispielsweise der Transponder, aktiviert, der dann die Notfalldaten überträgt. Diese Notfalldaten können dann ausgelesen werden, ohne dass eine Online-Verbindung zu der zentralen Datenbank aufgebaut werden müsste. Anhand dieser Notfalldaten kann dann eine Erstbehandlung durchgeführt werden. Auf gleiche Weise wäre es möglich, in der Sende- und/oder Empfangseinrichtung Daten zu erzeugen, die anschließend auf die Kommunikationseinrichtung zurück übertragen und in der entsprechenden Speichereinrichtung abgespeichert werden.

Vorteilhaft ist vorgesehen, dass die zentrale Rechnereinrichtung als eigenständige Instanz vorgesehen ist. In bestimmten Anwendungsfällen ist es jedoch auch denkbar, dass die zentrale Rechnereinrichtung Bestandteil wenigstens einer Sende- und/oder Empfangseinrichtung oder einer damit verbundenen Datenverarbeitungseinrichtung und/oder Bestandteil wenigstens einer Kommunikationseinrichtung ist.

Vorzugsweise ist vorgesehen, dass das Kommunikationsnetz als Telekommunikationsnetz ausgebildet ist. In einem solchen Fall kann vorgesehen sein, dass die Kommunikation zwischen der wenigstens einen Kommunikationseinrichtung und/oder der wenigstens eine Sende- und/oder Empfangseinrichtung einerseits, und der Steuereinrichtung beziehungsweise der zentralen Rechnereinrichtung andererseits, über das Telekommunikationsnetz erfolgt. Natürlich sind auch andere Netzarten denkbar.

Durch das wie vorstehend beschriebene Kommunikationssystem ist es insbesondere möglich, dass es mit der entsprechend ausgestatteten Kommunikationseinrichtung zwei Wege zu der Datenbank, beispielsweise der elektronischen Patientenakte, gibt:
1. den Weg über die ortsnahe Kommunikation mittels der Einrichtung zur Nahfeld kommunikation;
2 über den eigentlichen, originären bestimmungsgemäßen Kommunikationsweg über die Kommunikationseinrichtung direkt mit der Datenbank, beziehungsweise über die Steuereinrichtung mit der Datenbank.

Der Nutzer gewinnt über die ortsnahe Kommunikation (Einrichtung zur Nahfeldkommunikation und Connectoren) einen zweiten Weg, nunmehr aber orts- und zeitunabhängig auf seine wichtigsten Daten zuzugreifen. Diese können für den akuten Bedarf, beispielsweise für den Notfall, für chronische Maßnahmen, für den Fitness- und Wellness-Bereich und dergleichen verwendet werden.

Gemäß noch einem weiteren Aspekt der Erfindung wird ein Verfahren zum Datenmanagement nutzerspezifischer Daten in einem Kommunikationssystem bereitgestellt, welches die Merkmale des unabhängigen Patentanspruchs 12 aufweist.

In anderer Ausgestaltung wird ein Verfahren zum Datenmanagement nutzerspezifischer Daten in einem Kommunikationssystem bereitgestellt, welches die Merkmale des unabhängigen Patentanspruchs 13 aufweist.

Dabei ist selbstverständlich, dass die Merkmale der beiden zuvor beschriebenen Verfahrensaspekte in beliebiger Weise miteinander Kombiniert werden können, so dass insbesondere auch ein Verfahren vorteilhaft ist, welches alle Schritte der beiden zuvor beschriebenen Einzelverfahren umfasst.

Zu den Vorteilen, Wirkungen und der Funktionsweise des erfindungsgemäßen Verfahrens wird auf die vorstehenden Ausführungen zu den anderen Erfindungsaspekten vollinhaltlich Bezug genommen und hiermit verwiesen.

Das Verfahren dient zum Datenmanagement nutzerspezifischer Daten. Datenmanagement bedeutet generell die Erstellung, Bereitstellung, Bearbeitung, Pflege, den Austausch von Daten und dergleichen.

Vorteilhaft können bei dem Verfahren gemäß der zweiten Alternative nach oder bei der Herstellung der ortsnahen Verbindung zunächst Identifikationsdaten der Kommunikationseinrichtung beziehungsweise eines Nutzers der Kommunikationseinrichtung auf die Sende- und/oder Empfangseinrichtung übertragen werden.

Vorteilhaft dient das Verfahren zum Datenmanagement nutzerspezifischer Daten in Form einer elektronischen Patientenakte.

Vorzugsweise ist vorgesehen, dass nach Herstellung der Verbindung eine bidirektionale Kommunikation zwischen der Kommunikationseinrichtung und der Sende- und/oder Empfangseinrichtung initiiert wird.

In weiterer Ausgestaltung können nach Herstellung der ortsnahen Verbindung zumindest Teile von nutzerspezifischen Daten, die zumindest zeitweilig in einer der Einrichtung zur Nahfeldkommunikation zugeordneten Speichereinrichtung abgelegt sind, über die Einrichtung zur Nahfeldkommunikation zum Connector der Sende- und/oder Empfangseinrichtung übertragen werden.

Es kann vorgesehen sein, dass die Daten zumindest teilweise verschlüsselt übertragen werden.

In weiterer Ausgestaltung können die auf die Sende- und/oder Empfangseinrichtung übertragenen Daten auf eine mit dieser zumindest zeitweilig verbundene Datenverarbeitungseinrichtung weiter übertragen werden, wobei die Daten, sofern sie verschlüsselt übertragen wurden, zunächst entschlüsselt werden.

Von der Kommunikationseinrichtung können zum Zwecke der Identifikation vorteilhaft Authentifizierungsdaten zu der Sende- und/oder Empfangseinrichtung übertragen werden, wobei die Authentifizierungsdaten in der Sende- und/oder Empfangseinrichtung oder in einer daran angeschlossenen Datenverarbeitungseinrichtung überprüft werden.

Vorteilhaft ist die Einrichtung zur Nahfeldkommunikation als passiver Transponder ausgebildet, so dass die Herstellung der Verbindung zwischen der Kommunikationseinrichtung und der Sende- und/oder Empfangseinrichtung beginnt, nachdem der passive Transponder ein Aktivierungssignal von der Sende- und/oder Empfangseinrichtung erhalten hat.

In weiterer Ausgestaltung kann eine Datenbank mit nutzerspezifischen Daten in einer zentralen Rechnereinrichtung vorgesehen sein, wobei die Kommunikationseinrichtung direkt auf die zentrale Rechnereinrichtung und die Datenbank zugreift oder zugreifen kann.

Der "direkte" Zugriff soll dabei auch umfassen, dass dieser über eine wie weiter oben beschriebene Steuereinrichtung erfolgen kann, die im Kommunikationspfad zwischen der Kommunikationseinrichtung und der zentralen Rechnereinrichtung, oder aber in der zentralen Rechnereinrichtung selbst, vorgesehen ist.

In weiterer Ausgestaltung kann vorgesehen sein, dass eine Datenbank mit nutzerspezifischen Daten in einer zentralen Rechnereinrichtung vorgesehen ist, und dass die Sende- und/oder Empfangseinrichtung oder eine mit dieser verbundene Datenverarbeitungseinrichtung über ein geeignetes Kommunikationsmodul im Umfang der freigegebenen Daten direkt auf die zentrale Rechnereinrichtung und die Datenbank zugreift oder zugreifen kann.

Vorteilhaft kann auch vorgesehen sein, dass eine Datenbank mit nutzerspezifischen Daten in einer zentralen Rechnereinrichtung vorgesehen ist und dass die Sende- und/oder Empfangseinrichtung oder eine mit dieser verbundene Datenverarbeitungseinrichtung über die Kommunikationseinrichtung im Umfang der freigegebenen Daten auf die zentrale Rechnereinrichtung und die Datenbank zugreift oder zugreifen kann. In diesem Fall besteht keine direkte Kommunikationsverbindung, sondern zur Kommunikation wird die Kommunikationseinrichtung in den Kommunikationspfad dazwischen geschaltet.

Vorteilhaft ist vorgesehen, dass in der Sende- und/oder Empfangseinrichtung oder einer mit dieser verbundenen Datenverarbeitungseinrichtung nutzerspezifische Daten erzeugt und/oder bearbeitet werden und dass diese Daten anschließend über eine Einrichtung zur Nahfeldkommunikation auf die Kommunikationseinrichtung übertragen werden. Dabei kann insbesondere vorgesehen sein, dass zumindest Bestandteile der auf die Kommunikationseinrichtung übertragenen nutzerspezifischen Daten zumindest zeitweilig in einer - beispielsweise in der der Einrichtung zur Nahfeldkommunikation zugeordneten - Speichereinrichtung der Kommunikationseinrichtung abgespeichert werden. In weiterer Ausgestaltung kann vorgesehen sein, dass die auf die Kommunikationseinrichtung übertragenen nutzerspezifischen Daten auf einer Anzeigeeinrichtung der Kommunikationseinrichtung dargestellt werden.

Vorzugsweise können zumindest Bestandteile der auf die Kommunikationseinrichtung übertragenen nutzerspezifischen Daten von dieser auf die zentrale Rechnereinrichtung weiter übertragen und in der Datenbank abgelegt werden.

In weiterer Ausgestaltung kann vorgesehen sein, dass in der Sende- und/oder Empfangseinrichtung oder in einer mit dieser verbundenen Datenverarbeitungseinrichtung nutzerspezifische Daten erzeugt und/oder bearbeitet werden und dass diese Daten anschließend in einer der Sende- und/oder Empfangseinrichtung oder der Datenverarbeitungseinrichtung zugeordneten Speichereinrichtung zumindest zeitweilig abgespeichert werden.

Auch ist es möglich, dass in der Sende- und/oder Empfangseinrichtung oder in einer mit dieser verbundenen Datenverarbeitungseinrichtung nutzerspezifische Daten erzeugt und/oder bearbeitet werden und dass diese Daten anschließend auf die zentrale Rechnereinrichtung übertragen und in der Datenbank abgelegt werden.

Besonders vorteilhaft kann das Verfahren in einem wie weiter oben beschriebenen Kommunikationssystem durchgeführt werden beziehungsweise ablaufen.

Besonders vorteilhaft kann eine wie vorstehend beschriebene erfindungsgemäße Kommunikationseinrichtung als (Daten-)Terminal für eine elektronische Patientenakte verwendet werden. Ebenso kann/können ein wie vorstehend beschriebenes Kommunikationssystem und/oder ein wie vorstehend beschriebenes erfindungsgemäßes Verfahren zum Führen einer elektronischen Patientenakte verwendet werden.

Die vorliegende Erfindung eignet sich insbesondere für die Erstellung und Pflege einer elektronischen Patientenakte. Es ist nämlich zu erwarten, dass der versicherte Patient seine persönlichen Daten, die seine Gesundheit aber eben auch seine Krankheit beschreiben, mit Dienstleistern und den Kostenträgern austauschen muss.

Die Übertragung der Daten (Lesen, Schreiben, Vergleichen) geschieht gemäß der vorliegenden Erfindung eventbasiert oder kontinuierlich. Beide Übertragungsmuster können nicht auf einzelne Zugangs-Orte (HotSpots) begrenzt werden. Mit der vorliegenden Erfindung wird dieses Problem behoben.

Um diese mobilen, nicht vorhersehbaren Orte, aber eben auch stationäre Schwerpunkt-Stationen (Arztpraxen, Apotheken und dergleichen) sicher an die Datenbanken anzuschließen, kommen mehrere Komponenten zum Einsatz. In einem bevorzugten, nicht ausschließlichen Beispiel können dies sein:
- Die Kommunikationseinrichtung mit der Möglichkeit, Anwendungen zu laden und mit einem ausreichend großen Display; dazu Speicher- und Verarbeitungskapazität, die die Funktion des Clients ermöglicht.
- Zusätzlich wird eine zukünftige erweiterte Chipkarte (zum Beispiel Standard-SIM Karte) eingesetzt, die auf dem zusätzlich zur Verfügung stehenden Speicher die Sicherungsfunktionen des so genannten (Soft-) Connectors enthält. Zusätzlich tragen sie die Inhalte der elektronischen Gesundheitskarte und beispielsweise die Notfalldaten, die auch offline zur Verfügung stehen müssen.
- Um die gezielte Kommunikation der Kommunikationseinrichtung mit dem in der Nachbarschaft befindlichen Ziel-Gerät (Sende- und/oder Empfangseinrichtung) zu ermöglichen, werden in der Kommunikationseinrichtung und/oder auf der Chipkarte NFC / RFID Fähigkeiten implementiert. Diese ermöglichen die Übertragung ausgewählter Datensätze an einen weiteren Connector, der mit einem entsprechenden Empfänger ausgestattet ist.
- Dieser Connector entschlüsselt gegebenenfalls die gerade per RFID empfangenen Daten, um sie an das so genannte Primärsystem weiterzuleiten, das sich am Arbeitsplatz des Arztes, des Sanitäters oder des Apothekers befinden kann (zum Beispiel eine Sende- und/oder Empfangseinrichtung mit einer Datenverarbeitungseinrichtung).
- Umgekehrt wird auf diese Weise beispielsweise ein gerade erstelltes Rezept auf demselben Weg an die Kommunikationseinrichtung zurückgesendet, um dort aufgenommen, gegebenenfalls entschlüsselt und dann auf dem Display sichtbar gemacht zu werden.
- Auch kann der Arzt, Sanitäter dann die verabreichte Medizin und die geleisteten Maßnahmen an die elektronische Patientenakte auf den Datenbankrechner weiterleiten. Dies kann zum Beispiel auch über UMTS geschehen. Immer sind auf beiden Seiten die Connectoren im Einsatz, die die Verschlüsselung durchführen.
- Der Patient kann das erhaltene Rezept bei der Apotheke an das dort stehende, entsprechende Gerät übertragen. Zusätzlich hat er jetzt durch die Terminaleigenschaften der Kommunikationseinrichtung die Möglichkeit, auf den Datenbankrechner zuzugreifen und seine aktualisierte Patientenakte einzusehen.

Die Erfindung wird nun anhand von Ausführungsbeispielen unter Bezugnahme auf die beiliegenden Zeichnungen näher erläutert. Dabei zeigen
- Figur 1: in schematischer Ansicht die interne Struktur einer erfindungsgemäßen Chipkarte;
- Figur 2: ein erstes vorteilhaftes Ausführungsbeispiel eines Kommunikationssystems;
- Figur 3: ein zweites vorteilhaftes Ausführungsbeispiel eines Kommunikationssystems; und
- Figur 4: ein drittes vorteilhaftes Ausführungsbeispiel eines Kommunikationssystems.

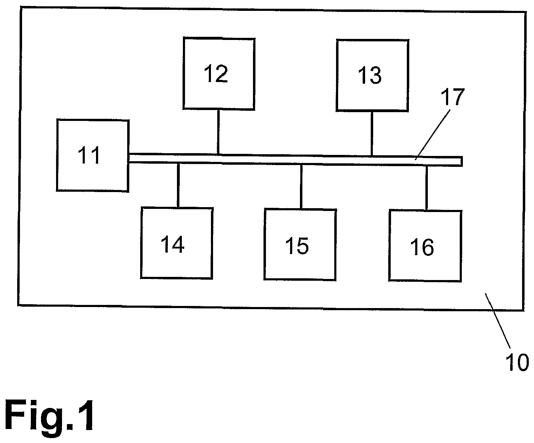

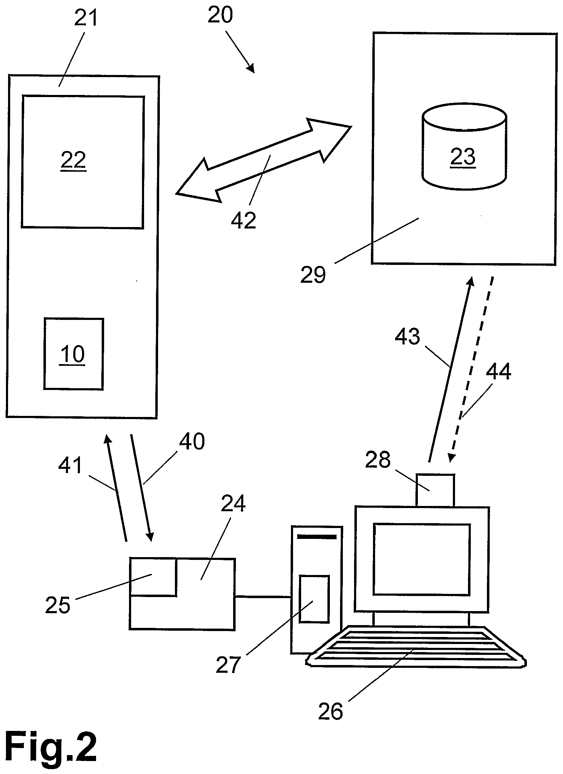

In der Figur 1 ist eine erfindungsgemäße Chipkarte 10 dargestellt, wie sie in einer Kommunikationseinrichtung 21 gemäß den Figuren 2 bis 4 Anwendung findet. Bei der Chipkarte 10 handelt es sich im vorliegenden Beispiel um eine so genannte SIM-Karte, bei der Kommunikationseinrichtung 21 um ein Mobiltelefon.

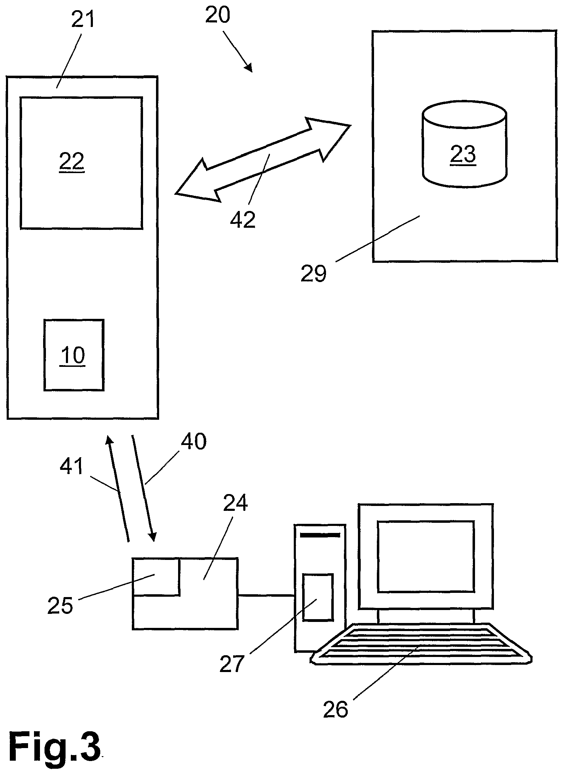

In den Ausführungsbeispielen wird die Erstellung, Handhabung und Pflege einer Datenbank mit nutzerspezifischen Daten beschrieben, bei der es sich in den Figuren 2 und 3 um eine elektronische Patientenakte handeln soll.

Die Chipkarte 10 weist zunächst einige Bestandteile auf, die zunächst für den eigentlichen, originären bestimmungsgemäßen Kommunikationsprozess, hier das Mobil-Telefonieren, benötigt werden. Dabei handelt es sich um wenigstens eine Prozessoreinheit 12 sowie wenigstens eine Speichereinrichtung 13, in der Kommunikationsnetzbetreiber-spezifische Daten abgelegt sind. Diese Bauteile sind über ein Bussystem 17 mit einem Kontaktierpad 11 verbunden. Bei den genannten Bauteilen könnte man von einem ersten Kommunikationsmodul für die bestimmungsgemäße Kommunikation sprechen.

Weiterhin weist die Chipkarte 10 erfindungsgemäß nunmehr noch einige weitere Bauelemente auf. Hierbei handelt es sich zunächst um eine Einrichtung 14 zur Nahfeldkommunikation, beispielsweise um ein RFID-Element. Hierbei könnte man von einem zweiten Kommunikationsmodul sprechen. Damit wird eine berührungslose ortsnahe Kommunikation mit einem externen Gerät möglich.

Weiterhin verfügt die Chipkarte 10 über einen Connector 15 zur Verbindung mit einem externen Gerät sowie über eine Speichereinrichtung 16, die der Einrichtung 14 zur Nahfeldkommunikation zugeordnet ist. In der Speichereinrichtung 16 sind nutzerspezifische Daten in Form einer elektronischen Gesundheitskarte abgelegt, beispielsweise Stammdaten, Vitaldaten, Prozessdaten, Authentifizierungsdaten, Notfalldaten und dergleichen. Weiterhin kann die Speichereinrichtung 16 Raum für das Abspeichern von Daten bieten, beispielsweise zum Abspeichern eines elektronischen Rezepts oder dergleichen.

Je nach Ausführungsform können die Speichereinrichtungen 13 und 16 auch in einer einzigen Speichereinrichtung zusammengefasst sein.

Nachfolgend werden anhand der Figuren 2 und 3 Ausführungsbeispiele beschrieben, bei denen die erfindungsgemäße Chipkarte 10 gemäß Figur 1 in einer Kommunikationseinrichtung 21 in Form eines Mobiltelefons eingesetzt ist.

Das Mobiltelefon 21 verfügt unter anderem über eine Anzeigeeinrichtung 22 in Form eines Displays, auf dem Informationen angezeigt werden können, beispielsweise ein auf das Mobiltelefon 21 übertragenes elektronisches Rezept.

Das Mobiltelefon 21 ist Bestandteil eines Kommunikationssystems 20, welches zusätzlich noch eine zentrale Rechnereinrichtung 29 umfasst, auf der sich eine Datenbank 23 mit nutzerspezifischen Daten, hier mit elektronischen Patientenakten, befindet. Es ist natürlich auch möglich, dass die genannten Elemente nicht Bestandteil des Kommunikationssystems 20 sind. In diesem Fall verfügt das Kommunikationssystem 20 vorteilhafterweise über eine geeignete Steuereinrichtung sowie geeignete Schnittstellen zu den genannten Elementen.

In der Datenbank 23 sind alle relevanten Daten und Informationen zum Patienten abgespeichert (eine elektronische Patientenakte). Der Nutzer/Patient kann über sein Mobiltelefon 21 direkt Einsicht in seine Patientenakte in der Datenbank 23 nehmen, indem er mit der zentralen Rechereinrichtung 23 kommuniziert, was durch den Pfeil 42 dargestellt ist. Hier ist ein bidirektionaler Austausch von Daten und Informationen möglich.

Weiterhin kann der Nutzer/Patient über eine ortsnahe Kommunikation unter Verwendung der Einrichtung 14 zur Nahfeldkommunikation (bei der es sich vorteilhafterweise um einen wie im allgemeinen Beschreibungsteil erläuterten Transonder, insbesondere einen passiven Transponder, handelt) mit einer Sende- und/oder Empfangseinrichtung 24 kommunizieren, die bei einem Arzt stationiert sein kann, und bei der es sich um ein Schreib/Lesegerät handeln kann. Diese Einrichtung 24 kann mit einer Datenverarbeitungseinrichtung 26 verbunden sein. Alternativ kann die Einrichtung 24 auch Bestandteil der Datenverarbeitungseinrichtung 26 sein. Die Datenverarbeitungseinrichtung 26, bei der es sich um einen Computer, einen TouchPad-PC oder dergleichen handeln kann, kann über eine Speichereinrichtung 27 zum Abspeichern von Daten verfügen. Weiterhin kann die Datenverarbeitungseinrichtung 26 mit einem Kommunikationsmodul 28 ausgerüstet sein, mittels dessen die Datenverarbeitungseinrichtung 26 mit der zentralen Rechnereinrichtung 29 kommunizieren kann (Figur 2), gegebenenfalls wie oben beschrieben über eine geeignete Steuereinrichtung mit geeigneter Schnittstelle.

Zum Aufbau einer Kommunikation wird das Mobiltelefon 21 an der Sende- und/oder Empfangseinrichtung 24 vorbeigeführt, vorzugsweise in einem Abstand zwischen 30 und 50 cm. Dabei wird von dieser ein Aktivierungssignal an die Einrichtung 14 zur Nahfeldkommunikation übertragen, die sich auf der Chipkarte 10 befindet. Damit wird ein Kommunikationspfad zwischen der Kommunikationseinrichtung 21 und einem entsprechenden Connector 25 der Sende- und/oder Empfangseinrichtung 24 etabliert. Von der Kommunikationseinrichtung 21 werden ausgewählte Datensätze des Patienten, die sich beispielsweise in der Speichereinrichtung 16 auf der Chipkarte 10 befinden und bei denen es sich um Stammdaten aus der elektronischen Gesundheitskarte, die ebenfalls auf der Chipkarte 10 abgelegt ist, handelt, zum Connector 25 übertragen, was insbesondere verschlüsselt erfolgen kann. Dies ist durch den Pfeil 40 dargestellt. Der Connector 25 entschlüsselt diese Daten und leitet sie an die Datenverarbeitungseinrichtung 26 weiter.

Damit hat sich der Nutzer/Patient bei der Sende- und/oder Empfangseinrichtung 24 identifiziert.

Der Arzt kann nun beispielsweise ebenfalls eine Datei erstellen, beispielsweise in Form eines elektronischen Rezepts, eines Befunds oder dergleichen, die anschließend in entsprechender Weise auf das Mobiltelefon 21 übertragen wird. Das ist durch den Pfeil 41 gekennzeichnet. Diese empfangene Datei, beispielsweise ein elektronisches Rezept, kann vom Mobiltelefon 21 beispielsweise in gleicher Weise auf die Sende- und/oder Empfangseinrichtung eines Apothekers übertragen und/oder auf dem Display 22 angezeigt werden.

Bei dem Ausführungsbeispiel in Figur 2 verfügt die Datenverarbeitungseinrichtung 26 über ein Kommunikationsmodul 28, mittels dessen eine direkte Kommunikation mit der zentralen Rechnereinrichtung 29 und damit ein Zugriff auf die Datenbank 23 möglich ist.

Mit den empfangenen Identifizierungsdaten des Nutzers/Patienten kann von der Datenverarbeitungseinrichtung 26 auf die Datenbank 23 zugegriffen werden, um zunächst die Identifizierung zu verifizieren. Das ist durch den Pfeil 44 dargestellt. Dies ist nicht unbedingt erforderlich, so dass dieser Schritt durch einen gestrichelten Pfeil dargestellt ist. Weiterhin kann vom Nutzer/Patienten eine Ermächtigung an die Datenverarbeitungseinrichtung 26 übertragen werden, bestimmte Daten der Patientenakte in der Datenbank einzusehen. Entweder werden diese Ermächtigungsdaten gleich von dem Mobiltelefon 21 an die Sende- und/oder Empfangseinrichtung 24 mit übertragen, oder die Ermächtigung erfolgt durch den Nutzer/Patienten an der Datenverarbeitungseinrichtung 26 selbst, etwa durch Eingabe einer entsprechenden PIN. Über die Sende- und/oder Empfangseinrichtung 24 beziehungsweise die Datenverarbeitungseinrichtung 26 hat der Arzt nunmehr Zugriff auf die vom Nutzer/Patienten freigegebenen Daten in der Datenbank 23.

Die vom Arzt auf der Datenverarbeitungseinrichtung 26 erzeugten Daten können zum einen auf das Mobiltelefon 21 zurück übertragen und in der Speichereinrichtung 16 abgespeichert werden. Ebenso können die Daten in der Speichereinrichtung 27 der Datenverarbeitungseinrichtung 26 abgespeichert werden. Darüber hinaus ist es auch möglich, diese Daten auf die zentrale Rechnereinrichtung 29 zu übertragen und in der Datenbank 23 abzulegen, was durch den Pfeil 43 gekennzeichnet ist. Auf diese Weise entsteht eine vollständige, stets aktuelle elektronische Patientenakte, in der alle medizinischen Befunde, alle verschriebenen Medikamente und sonstigen Informationen zum Gesundheitsbild des Nutzers/Patienten abgelegt sind.

In der Figur 3 ist ein etwas anderes Ausführungsbeispiel dargestellt, indem die Datenverarbeitungseinrichtung 26 keine direkte Zugriffsmöglichkeit auf die Datenbank 23 hat. Vielmehr erfolgt hier die Übertragung von Daten ausschließlich über das Mobiltelefon 21.

Hat der Nutzer des Mobiltelefons 21 beispielsweise einen Unfall und sind in der Speichereinrichtung 16 auf der Chipkarte 10 beispielsweise Notfalldaten abgespeichert, kann ein herbeigerufener Arzt oder Sanitäter problemlos auf diese Daten zugreifen, auch wenn der Nutzer/Patient nicht mehr in der Lage ist, sein Mobiltelefon aktiv zu bedienen, etwa um eine Verbindung zu der Datenbank 23 herzustellen.

Der Arzt/Sanitäter, der über eine entsprechende Sende- und/oder Empfangseinrichtung 24 verfügt, hält diese nahe an das Mobiltelefon 21 und aktiviert die Einrichtung 14 zur Nahfeldkommunikation. Die Notfalldaten werden über diese Kommunikationsverbindung auf den Connector 25 der Sende- und/oder Empfangseinrichtung übertragen und können anschließend entsprechend genutzt werden.

Auf gleiche Weise könnte der Arzt/Sanitäter Daten bezüglich der Erstbehandlung erzeugen und diese auf das Mobiltelefon 21 des Nutzers/Patienten zurück übertragen, wo die Daten dann in der Speichereinrichtung 16 abgespeichert und zu einem späteren Zeitpunkt auf die Datenbank 23 weiter übertragen werden können.

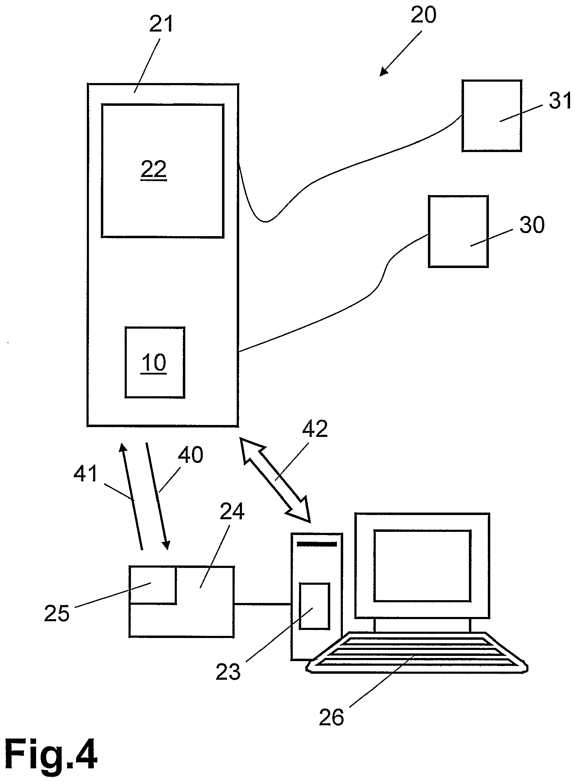

In Figur 4 schließlich ist ein Ausführungsbeispiel aus dem Fitness- oder Wellness-Bereich dargestellt. Wiederum verfügt der Nutzer über ein Mobiltelefon 21 mit Chipkarte 10 und Display 22, das in der wie bezüglich der Figuren 1 bis 3 vorstehend beschriebenen Art und Weise ausgebildet ist.

Das Mobiltelefon 21 ist diesmal jedoch mit einer Anzahl von Sensorelementen 30, 31 verbunden, mittels derer physiologische Werte des Nutzers erfasst werden.

Das Mobiltelefon 21 wird über eine ortsnahe Kommunikation in der wie zu den Figuren 1 bis 3 beschriebenen Weise mit einer Sende- und/oder Empfangseinrichtung 24 verbunden, die wiederum mit einer Datenverarbeitungseinrichtung 26 verbunden ist. Diesmal ist die Datenbank 23 mit den nutzerspezifischen Daten jedoch auf der Datenverarbeitungseinrichtung 26 selbst implementiert.

Die von den Sensorelementen 30, 31 erfassten Werte werden auf die Datenverarbeitungseinrichtung 26 übertragen und dort weiterverarbeitet und gegebenenfalls in der Datenbank 23 abgelegt. Entsprechende Daten und Informationen bezüglich einer Trainingsoptimierung, der Auswertung von Trainingsergebnissen oder dergleichen können in wie zuvor beschriebener Weise auf das Mobiltelefon 21 zurück übertragen werden. Darüber hinaus könnte dem Nutzer noch die Möglichkeit eingeräumt werden, direkt mit der Datenbank 23 auf der Datenverarbeitungseinrichtung 26 zu kommunizieren (Pfeil 42), beispielsweise um den Trainingsverlauf oder -fortschritt über einen längeren Zeitraum zu verfolgen, oder um größere Datenmengen zu übertragen.

Alle zuvor beschriebenen Beispiele haben gemeinsam, dass der Nutzer/Patient stets gleichberechtigter Partner im Kommunikationsprozess ist und dass der Nutzer/Patient stets Zugriff auf die ihn betreffenden Daten hat und bestimmen kann, wem er seine Daten in welchem Umfang freigibt.

### Bezugszeichenliste

- 10: Chipkarte (SIM Karte)
- 11: Kontaktierpad
- 12: Prozessoreinheit
- 13: Speichereinrichtung zum Speichern von Kommunikationsnetzbetreiberspezifischen Daten
- 14: Einrichtung zur Nahfeldkommunikation
- 15: Connector zur Verbindung mit einer Sende- und/oder Empfangseinrichtung
- 16: Speichereinrichtung
- 17: Bussystem

- 20: Kommunikationssystem
- 21: Kommunikationseinrichtung
- 22: Anzeigeeinrichtung (Display)
- 23: Datenbank
- 24: Sende- und/oder Empfangseinrichtung
- 25: Connector zur Verbindung mit einer Kommunikationseinrichtung
- 26: Datenverarbeitungseinrichtung
- 27: Speichereinrichtung
- 28: Kommunikationsmodul
- 29: Zentrale Rechnereinrichtung
- 30: Sensorelement
- 31: Sensorelement

- 40-44: Richtungspfeile einer Kommunikationsverbindung

## Patentansprüche

1. Chipkarte (10) für eine, insbesondere mobile, Kommunikationseinrichtung (21), welche als Mittel zur Zugangsberechtigung für die Teilnahme in einem Kommunikationsnetz ausgebildet ist, mit einem ersten Kommunikationsmodul, mittels dessen der eigentliche, originäre bestimmungsgemäße Gebrauch der Kommunikationseinrichtung (21) in einem Kommunikationsnetz stattfindet, aufweisend wenigstens eine Prozessoreinheit (12) und wenigstens eine Speichereinrichtung (13) zum zumindest zeitweiligen Speichern von Kommunikationsnetzbetreiber-spezifischen Daten, wobei auf der Chipkarte (10) weiterhin ein zweites Kommunikationsmodul implementiert ist, aufweisend eine Einrichtung (14) zur Nahfeldkommunikation zur Durchführung einer ortsnahen Kommunikation mit einer externen Sende- und/oder Empfangseinrichtung (24), **dadurch gekennzeichnet, dass** die Chipkarte (10) einen Connector (15) zur Verbindung mit der externen Sende- und/oder Empfangseinrichtung (24) aufweist, mit dem sich alle bei der Übertragung von Daten erforderlichen Sicherungs- und Verschlüsselungsprozeduren vornehmen lassen, dass der Connector (15) Mittel zum Verschlüsseln und/oder Entschlüsseln von Daten sowie Mittel zum Authentifizieren aufweist, dass die Chipkarte (10) wenigstens eine Speichereinrichtung (16) aufweist, die der wenigstens einen Einrichtung (14) zur Nahfeldkommunikation zugeordnet ist, in welcher zumindest zeitweilig nutzerspezifische Daten abgelegt sind, oder dass die Chipkarte (10) eine Schnittstelle zu einer Speichereinrichtung aufweist, in der zumindest zeitweilig nutzerspezifische Daten abgelegt sind.

2. Chipkarte nach Anspruch 1, **dadurch gekennzeichnet, dass** wenigstens eine Einrichtung (14) zur Nahfeldkommunikation als RFID-Element (Radio Frequency Identification) ausgebildet ist.

3. Chipkarte nach Anspruch 1 oder 2, **dadurch gekennzeichnet, dass** die wenigstens eine Einrichtung (14) zur Nahfeldkommunikation einen Transponder zum Senden und/oder Empfangen von Daten aufweist.

4. Chipkarte nach Anspruch 3, **dadurch gekennzeichnet, dass** der Transponder als passiver Transponder ausgebildet ist.

5. Chipkarte nach Anspruch 1, **dadurch gekennzeichnet, dass** in der Speichereinrichtung (16) nutzerspezifische Daten in Form einer elektronischen Gesundheitskarte abgelegt sind.

6. Chipkarte nach einem der Ansprüche 1 bis 5, **dadurch gekennzeichnet, dass** diese als SIM-Karte (Subscriber Identity Module) für ein Mobiltelefon ausgebildet ist.

7. Kommunikationseinrichtung (21), insbesondere mobile Kommunikationseinrichtung, **dadurch gekennzeichnet, dass** diese eine Chipkarte (10) nach einem der Ansprüche 1 bis 6 aufweist.

8. Kommunikationseinrichtung nach Anspruch 7, **dadurch gekennzeichnet, dass** diese eine Anzeigeeinrichtung (22) zur Darstellung von Informationen aufweist.

9. Kommunikationseinrichtung nach Anspruch 7 oder 8, **dadurch gekennzeichnet, dass** wenigstens ein Sensorelement zur Erfassung nutzerspezifischer Daten vorgesehen ist und dass das wenigstens eine Sensorelement in der Kommunikationseinrichtung (21) integriert ist.

10. Kommunikationseinrichtung nach einem der Ansprüche 7 bis 9, **dadurch gekennzeichnet, dass** wenigstens eine Schnittstelle zu einem Sensorelement (30, 31) zur Erfassung nutzerspezifischer Daten vorgesehen ist.

11. Kommunikationseinrichtung nach einem der Ansprüche 7 bis 10, **dadurch gekennzeichnet, dass** diese als Mobiltelefon ausgebildet ist.

12. Verfahren zum Datenmanagement nutzerspezifischer Daten in einem Kommunikationssystem (20), welches eine oder mehrere Kommunikationseinrichtungen (21) nach einem der Ansprüche 7 bis 11, und wenigstens eine Sende- und/oder Empfangseinrichtung (24) zur zumindest zeitweiligen Kommunikation mit der/den Kommunikationseinrichtung(en) (21) aufweist, wobei nutzerspezifische Daten in einer Datenbank (23), welche auf einer zentralen Rechnereinrichtung (29) vorgesehen ist, abgelegt sind, **gekennzeichnet durch** folgende Schritte:
a) Es wird eine Verbindung zwischen einem Connector (15) in einer Kommunikationseinrichtung (21) und einem Connector (25) in einer Sende- und/oder Empfangseinrichtung (24) hergestellt;
b) Nach Herstellung der Verbindung wird in der Sende- und/oder Empfangseinrichtung (24) oder einer an dieser angeschlossenen Datenverarbeitungseinrichtung (26) die Kommunikationseinrichtung (21) beziehungsweise ein Nutzer der Kommunikationseinrichtung (21) anhand übertragener Identifikationsdaten identifiziert;
c) Nach erfolgter Identifizierung erfolgt von Seiten der Kommunikationseinrichtung (21) eine Datenfreigabe zum Zugriff der Sende- und/oder Empfangseinrichtung (24) oder einer daran angeschlossenen Datenverarbeitungseinrichtung (26) auf zumindest Bestandteile der nutzerspezifischen Daten in der Datenbank.

13. Verfahren zum Datenmanagement nutzerspezifischer Daten in einem Kommunikationssystem (20), welches eine oder mehrere Kommunikationseinrichtungen (21) nach einem der Ansprüche 7 bis 11, und wenigstens eine Sende- und/oder Empfangseinrichtung (24) zur zumindest zeitweiligen Kommunikation mit der/den Kommunikationseinrichtung(en) (21) aufweist, wobei nutzerspezifische Daten in einer Speichereinrichtung (16) der Kommunikationseinrichtung (21) abgelegt sind, **gekennzeichnet durch** folgende Schritte:
a) In der Kommunikationseinrichtung (21) ist eine Einrichtung (14) zur Nahfeldkommunikation vorgesehen, und über die Einrichtung (14) zur Nahfeldkommunikation wird eine ortsnahe Verbindung zwischen der Kommunikationseinrichtung (21) und der Sende- und/oder Empfangseinrichtung (24) hergestellt;
b) Nach der Herstellung der ortsnahen Verbindung werden nutzerspezifische Daten, die in der Speichereinrichtung (16) abgelegt sind, auf die Sende- und/oder Empfangseinrichtung (24) oder eine daran angeschlossene Datenverarbeitungseinrichtung (26) übertragen, wobei die Daten zumindest teilweise verschlüsselt übertragen werden, wobei die auf die Sende- und/oder Empfangseinrichtung (24) übertragenen Daten auf eine mit dieser zumindest zeitweilig verbundene Datenverarbeitungseinrichtung (26) weiter übertragen werden, und die Daten, die verschlüsselt übertragen wurden, zunächst entschlüsselt werden, wobei von der Kommunikationseinrichtung (21) zum Zwecke der Identifikation Authentifizierungsdaten zu der Sende- und/oder Empfangseinrichtung (24) übertragen werden, und die Authentifizierungsdaten in der Sende- und/oder Empfangseinrichtung (24) oder in einer daran angeschlossenen Datenverarbeitungseinrichtung (26) überprüft werden.

14. Verfahren nach Anspruch 13, **dadurch gekennzeichnet, dass** nach oder bei der Herstellung der ortsnahen Verbindung zunächst Identifikationsdaten der Kommunikationseinrichtung (21) beziehungsweise eines Nutzers der Kommunikationseinrichtung (21) auf die Sende- und/oder Empfangseinrichtung übertragen werden.

15. Verfahren nach einem der Ansprüche 12 bis 14 zum Datenmanagement nutzerspezifischer Daten in Form einer elektronischen Patientenakte.

16. Verfahren nach einem der Ansprüche 12 bis 15, **dadurch gekennzeichnet, dass** nach der Herstellung der Verbindung eine bidirektionale Kommunikation (40, 41) zwischen der Kommunikationseinrichtung (21) und der Sende- und/oder Empfangseinrichtung (24) initiiert wird.

17. Verfahren nach einem der Ansprüche 13 bis 16, **dadurch gekennzeichnet, dass** die Einrichtung (14) zur Nahfeldkommunikation als passiver Transponder ausgebildet ist und dass eine Herstellung der Verbindung zwischen der Kommunikationseinrichtung (21) und der Sende- und/oder Empfangseinrichtung (24) erfolgt, nachdem der passive Transponder ein Aktivierungssignal von der Sende- und/oder Empfangseinrichtung (24) erhalten hat.

18. Verfahren nach einem der Ansprüche 12 bis 17, **dadurch gekennzeichnet, dass** die Datenbank (23) mit nutzerspezifischen Daten in der zentralen Rechnereinrichtung (29) vorgesehen ist und dass die Kommunikationseinrichtung (21) direkt auf die zentrale Rechnereinrichtung (29) und die Datenbank (23) zugreift oder zugreifen kann.

19. Verfahren nach einem der Ansprüche 12 bis 18, **dadurch gekennzeichnet, dass** die Datenbank (23) mit nutzerspezifischen Daten in der zentralen Rechnereinrichtung (29) vorgesehen ist und dass die Sende- und/oder Empfangseinrichtung (24) oder eine mit dieser verbundene Datenverarbeitungseinrichtung (26) über ein geeignetes Kommunikationsmodul (28) im Umfang der freigegebenen Daten direkt auf die zentrale Rechnereinrichtung (29) und die Datenbank (23) zugreift oder zugreifen kann.

20. Verfahren nach einem der Ansprüche 12 bis 19, **dadurch gekennzeichnet, dass** die Datenbank (23) mit nutzerspezifischen Daten in der zentralen Rechnereinrichtung (29) vorgesehen ist und dass die Sende- und/oder Empfangseinrichtung (24) oder eine mit dieser verbundene Datenverarbeitungseinrichtung (26) über die Kommunikationseinrichtung (21) im Umfang der freigegebenen Daten auf die zentrale Rechnereinrichtung (29) und die Datenbank (23) zugreift oder zugreifen kann.

21. Verfahren nach einem der Ansprüche 16 bis 20, **dadurch gekennzeichnet, dass** in der Sende- und/oder Empfangseinrichtung (24) oder einer mit dieser verbundenen Datenverarbeitungseinrichtung (26) nutzerspezifische Daten erzeugt und/oder bearbeitet werden und dass diese Daten anschließend auf die Kommunikationseinrichtung (21) übertragen werden.

22. Verfahren nach Anspruch 21, **dadurch gekennzeichnet, dass** zumindest Bestandteile der auf die Kommunikationseinrichtung (21) übertragenen nutzerspezifischen Daten zumindest zeitweilig in einer Speichereinrichtung (16) der Kommunikationseinrichtung (21) abgespeichert werden.

23. Verfahren nach Anspruch 21 oder 22, **dadurch gekennzeichnet, dass** die auf die Kommunikationseinrichtung (21) übertragenen nutzerspezifischen Daten auf einer Anzeigeeinrichtung (22) der Kommunikationseinrichtung (21) dargestellt werden.

24. Verfahren nach einem der Ansprüche 21 bis 23, **dadurch gekennzeichnet, dass** zumindest Bestandteile der auf die Kommunikationseinrichtung (21) übertragenen nutzerspezifischen Daten von dieser auf die zentrale Rechnereinrichtung (29) weiter übertragen und in der Datenbank (23) abgelegt werden.

25. Verfahren nach einem der Ansprüche 12 bis 24, **dadurch gekennzeichnet, dass** in der Sende- und/oder Empfangseinrichtung (24) oder in einer mit dieser verbundenen Datenverarbeitungseinrichtung (26) nutzerspezifische Daten erzeugt und/oder bearbeitet werden und dass diese Daten anschließend in einer der Sende- und/oder Empfangseinrichtung (24) oder der Datenverarbeitungseinrichtung (26) zugeordneten Speichereinrichtung (27) zumindest zeitweilig abgespeichert werden.

26. Verfahren nach einem der Ansprüche 19 bis 25, **dadurch gekennzeichnet, dass** in der Sende- und/oder Empfangseinrichtung (24) oder in einer mit dieser verbundenen Datenverarbeitungseinrichtung (26) nutzerspezifische Daten erzeugt und/oder bearbeitet werden und dass diese Daten anschließend auf die zentrale Rechnereinrichtung (29) übertragen und in der Datenbank (23) abgelegt werden.

27. Verwendung einer Kommunikationseinrichtung (21) nach einem der Ansprüche 7 bis 11 als Terminal für eine elektronische Patientenakte.

28. Verwendung eines Verfahrens nach einem der Ansprüche 12 bis 26 zum Führen einer elektronischen Patientenakte.

## Claims

1. Chip card (10) for a, in particular mobile, communication device (21), which is designed as a means for access authorization for participation in a communication network, with a first communication module, by means of which the actual, original intended use of the communication device (21) in a communications network tales place, comprising at least one processor unit (12) and at least one memory device (13) for at least temporarily storing communication network operators -specific data, whereby furthermore a second communication module is implemented on the chip card (10), comprising a device (14) for near-field communication for performing a local communication with an external transmitting and/or receiving device (24), **characterized in that** the chip card (10) comprises a connector (15) for the connection with the external transmitting and/or receiving device (24), by use of which all security and encryption procedures required at the transmission of data can be performed, that the controller (15) comprises means for encrypting and/or decrypting data as well as means for authentication, that the chip card (10) comprises at least one memory device (16), which is assigned to the at least one device (14) for near-field communication and in which at least temporarily user-specific data is stored, or that the chip card (10) comprises an interface to a memory device, in which at least temporarily user-specific data is stored.

2. Chip card according to claim 1, **characterized in that** at least one device (14) for near-field communication is provided as an RFID-element (Radio Frequency Identification).

3. Chip card according to claim 1 or 2, **characterized in that** the at least one device (14) for near-field communication comprises a transponder for transmitting and/or receiving data.

4. Chip card according to claim 3, **characterized in that** the transponder is designed as a passive transponder.

5. Chip card according to claim 1, **characterized in that** user-specific data in the form of an electronic health card are stored in the memory device (16).

6. Chip card according to anyone of claims 1 to 5, **characterized in that** it is designed as a SIM card (Subscriber Identity Module) for a mobile phone.

7. Communication device (21), in particular mobile communication device, **characterized in that** it comprises a chip card (10) according to anyone of claims 1 to 6.

8. Communication device according to claim 7, **characterized in that** it comprises a display device (22) for displaying information.

9. Communication device according to claim 7 or 8, **characterized in that** at least one sensor element for detecting user-specific data is provided and that the at least one sensor element is integrated in the communication device (21).

10. Communication device according to anyone of claims 7 to 9, **characterized in that** at least one interface to a sensor element (30, 31) for detecting user-specific data is provided.

11. Communication device according to anyone of claims 7 to 10, **characterized in that** it is designed as a mobile phone.

12. Method for data management of user-specific data in a communication system (20), which comprises one or more communication devices (21) according to anyone of the claims 7 to 11, and at least one transmitting and/or receiving device (24) for at least temporary communication with the communication device(s) (21), wherein user-specific data being stored in a database (23), which is provided on a central computer device (29), **characterized by** the following steps:
a) a connection is established between a connector (15) in a communication device (21) and a connector (25) in a transmitting and/or receiving device (24);
b) after the connection has been established, the communication device (21) or a user of the communication device (21) is identified in the transmitting and/or receiving device (24) or a data processing device (26) connected thereto on the basis of transmitted identification data;
c) after the identification has been carried out, the communication device (21) issues a data release for access by the transmitting and/or receiving device (24) or a connected data processing device (26) to at least components of the user-specific data in the database.

13. Method for data management of user-specific data in a communication system (20), which comprises one or more communication devices (21) according to anyone of claims 7 to 11, and at least one transmitting and/or receiving device (24) for at least temporary communication with the communication device(s) (21), wherein user-specific data being stored in a memory device (16) of the communication device (21), **characterized by** the following steps:
a) in the communication device (21), a device (14) for near-field communication is provided, and via the device (14) for near-field communication a local connection between the communication device (21) and the transmitting and/or receiving device (24) is established;
b) after the local connection has been established, user-specific data stored in the memory device (16) are transmitted to the transmitting and/or receiving device (24) or to a data processing device (26) connected thereto, whereby the data are transmitted at least partially encrypted. whereby the data transmitted to the transmitting and/or receiving device (24) are transmitted further to a data processing device (26) connected thereto at least temporarily, and whereby the data, that have been transmitted in encrypted form, are decrypted first, whereby from the communication device (21) for the purpose of identification authentication data to the transmitting and/or receiving device (24) are transmitted, and the authentication data are checked in the transmitting and/or receiving device (24) or in a connected data processing device (26).

14. Method according to claim 13, **characterized in that** after or during the establishment of the local connection first identification data of the communication device (21) or of a user of the communication device (21) are transmitted to the transmitting and/or receiving device.

15. Method according to anyone of claims 12 to 14 for data management of user-specific data in the form of an electronic patient record.

16. Method according to anyone of claims 12 to 15, **characterized in that** after the establishment of the connection, a bidirectional communication (40, 41) between the communication device (21) and the transmitting and/or receiving device (24) is initiated.

17. Method according to anyone of claims 13 to 16, **characterized in that** the device (14) for near-field communication is designed as a passive transponder and that a connection between the communication device (21) and the transmitting and/or receiving device (24) is established, after the passive transponder has received an activation signal from the transmitting and/or receiving device (24).

18. Method according to anyone of claims 12 to 17, **characterized in that** the database (23) with user-specific data is provided in the central computer device (29) and that the communication device (21) can access or accesses directly on the central computer device (29) and the database (23).

19. Method according to anyone of claims 12 to 18, **characterized in that** the database (23) with user-specific data is provided in the central computer device (29) and that the transmitting and/or receiving device (24) or a data processing device (26) connected thereto directly accesses or can access the central computer device (29) and the database (23) via a suitable communication module (28) in the extent of the shared data.

20. Method according to anyone of claims 12 to 19, **characterized in that** the database (23) with user-specific data is provided in the central computer device (29) and that the transmitting and/or receiving device (24) or a data processing device (26) connected thereto accesses or can access the central computer device (29) and the database (23) via the communication device (21) in the extent of the shared data.

21. Method according to one of Claims 16 to 20, **characterized in that** user-specific data are generated and /or processed in the transmitting and/or receiving device (24) or a data processing device (26) connected thereto and that these data are subsequently transmitted to the communication device (21).

22. Method according to claim 21, **characterized in that** at least components of the user-specific data transmitted to the communication device (21) are at least temporarily stored in a memory device (16) of the communication device (21).

23. Method according to claim 21 or 22, **characterized in that** the user-specific data transmitted to the communication device (21) is displayed on a display device (22) of the communication device (21).

24. Method according to anyone of claims 21 to 23, **characterized in that** at least components of the user-specific data transmitted to the communication device (21) are further transmitted from the latter to the central computer device (29) and stored in the database (23).

25. Method according to anyone of claims 12 to 24, **characterized in that** user-specific data are generated and/or processed in the transmitting and/or receiving device (24) or in a data processing device (26) connected thereto and that these data are subsequently at least temporarily stored in a memory device (27) associated to the transmitting and/or receiving device (24) or to the data processing device (26).

26. Method according to anyone of claims 19 to 25, **characterized in that** user-specific data are generated and/or processed in the transmitting and/or receiving device (24) or in a data processing device (26) connected thereto and that these data are subsequently transmitted to the central computer device (29) and stored in the database (23).

27. Use of a communication device (21) according to anyone of claims 7 to 11 as a terminal for an electronic patient record.

28. Use of a method according to anyone of claims 12 to 26 for maintaining an electronic patient record.

## Revendications

1. Carte à puce (10) pour un dispositif de communication (21), en particulier mobile, qui est formée en tant que moyen d'autorisation d'accès pour la participation dans un réseau de communication, avec un premier module de communication, au moyen duquel l'utilisation réelle, originale, conforme aux instructions, du dispositif de communication (21) a lieu dans un réseau de communication, comprenant au moins une unité de traitement (12) et au moins un dispositif de stockage (13) pour le stockage au moins temporaire de données spécifiques à un opérateur de réseau de communication, dans lequel sur la carte à puce (10) est implémenté en outre un second module de communication, comprenant un dispositif (14) pour la communication en champ proche en vue de l'exécution d'une communication de courte portée avec un dispositif d'émission et/ou de réception externe (24), **caractérisée en ce que** la carte à puce (10) comprend un connecteur (15) pour la liaison avec le dispositif d'émission et/ou de réception externe (24), avec lequel toutes les procédures de sécurité et de chiffrement nécessaires lors de la transmission de données peuvent être réalisées, **en ce que** le connecteur (15) comprend des moyens de chiffrement et/ou de déchiffrement de données ainsi que des moyens d'authentification, **en ce que** la carte à puce (10) comprend au moins un dispositif de stockage (16) qui est associé à l'au moins un dispositif (14) pour la communication en champ proche, dans lequel sont déposées au moins temporairement des données spécifiques à l'utilisateur, ou **en ce que** la carte à puce (10) comprend une interface avec un dispositif de stockage dans lequel sont déposées au moins temporairement des données spécifiques à l'utilisateur.

2. Carte à puce selon la revendication 1, **caractérisée en ce qu'**au moins un dispositif (14) pour la communication en champ proche est formé en tant qu'élément RFID (Radio Frequency Identification).

3. Carte à puce selon la revendication 1 ou 2, **caractérisée en ce que** l'au moins un dispositif (14) pour la communication en champ proche comprend un transpondeur pour l'émission et/ou la réception de données.

4. Carte à puce selon la revendication 3, **caractérisée en ce que** le transpondeur est formé en tant que transpondeur passif.

5. Carte à puce selon la revendication 1, **caractérisée en ce que** dans le dispositif de stockage (16) sont déposées des données spécifiques à l'utilisateur sous forme d'une carte de santé électronique.

6. Carte à puce selon l'une quelconque des revendications 1 à 5, **caractérisée en ce que** celle-ci est formée en tant que carte SIM (Subscriber Identity Module) pour un téléphone mobile.

7. Dispositif de communication (21), en particulier dispositif de communication mobile, **caractérisé en ce que** celui-ci comprend une carte à puce (10) selon l'une quelconque des revendications 1 à 6.

8. Dispositif de communication selon la revendication 7, **caractérisé en ce que** celui-ci comprend un dispositif d'affichage (22) pour la représentation d'informations.

9. Dispositif de communication selon la revendication 7 ou 8, **caractérisé en ce qu'**au moins un élément capteur est prévu pour la détection de données spécifiques à l'utilisateur et **en ce que** l'au moins un élément capteur est intégré dans le dispositif de communication (21).

10. Dispositif de communication selon l'une quelconque des revendications 7 à 9, **caractérisé en ce qu'**au moins une interface avec un élément capteur (30, 31) est prévue pour la détection de données spécifiques à l'utilisateur.

11. Dispositif de communication selon l'une quelconque des revendications 7 à 10, **caractérisé en ce que** celui-ci est formé en tant que téléphone mobile.

12. Procédé de gestion de données pour des données spécifiques à l'utilisateur dans un système de communication (20), lequel comprend un ou plusieurs dispositifs de communication (21) selon l'une quelconque des revendications 7 à 11, et au moins un dispositif d'émission et/ou de réception (24) pour la communication au moins temporaire avec le/les dispositif (s) de communication (21), dans lequel des données spécifiques à l'utilisateur sont déposées dans une banque de données (23), laquelle est prévue dans un dispositif de calcul central (29), **caractérisé par** les étapes suivantes :
a) il est établi une liaison entre un connecteur (15) dans un dispositif de communication (21) et un connecteur (25) dans un dispositif d'émission et/ou de réception (24) ;
b) après l'établissement de la liaison, dans le dispositif d'émission et/ou de réception (24) ou dans un dispositif de traitement de données (26) raccordé à celui-ci, le dispositif de communication (21) ou un utilisateur du dispositif de communication (21) est identifié à l'aide de données d'identification transmises ;
c) après une identification réussie, du côté du dispositif de communication (21), une libération de données est effectuée pour l'accès du dispositif d'émission et/ou de réception (24) ou d'un dispositif de traitement de données (26) raccordé à celui-ci à au moins des éléments constituants des données spécifiques à l'utilisateur dans la banque de données.

13. Procédé de gestion de données pour des données spécifiques à l'utilisateur dans un système de communication (20), lequel comprend un ou plusieurs dispositifs de communication (21) selon l'une quelconque des revendications 7 à 11, et au moins un dispositif d'émission et/ou de réception (24) pour la communication au moins temporaire avec le/les dispositif (s) de communication (21), dans lequel des données spécifiques à l'utilisateur sont déposées dans un dispositif de stockage (16) du dispositif de communication (21), **caractérisé par** les étapes suivantes :
a) dans le dispositif de communication (21) un dispositif (14) est prévu pour la communication en champ proche, et par le biais du dispositif (14) pour la communication en champ proche une liaison de courte portée est établie entre le dispositif de communication (21) et le dispositif d'émission et/ou de réception (24) ;
b) après l'établissement de la liaison de courte portée, des données spécifiques à l'utilisateur, qui sont déposées dans le dispositif de stockage (16), sont transmises au dispositif d'émission et/ou de réception (24) ou à un dispositif de traitement de données (26) relié à celui-ci, dans lequel les données sont transmises au moins en partie d'une manière chiffrée, dans lequel les données transmises au dispositif d'émission et/ou de réception (24) sont en outre transmises à un dispositif de traitement de données (26) relié au moins temporairement à celui-ci, et les données, qui ont été transmises de manière chiffrée, sont d'abord déchiffrées, dans lequel des données d'authentification sont transmises par le dispositif de communication (21) au dispositif d'émission et/ou de réception (24) aux fins d'identification, et les données d'authentification sont vérifiées dans le dispositif d'émission et/ou de réception (24) ou dans un dispositif de traitement de données (26) raccordé à celui-ci.

14. Procédé selon la revendication 13, **caractérisé en ce que**, après ou durant l'établissement de la liaison de courte portée, des données d'identification du dispositif de communication (21) ou d'un utilisateur du dispositif de communication (21) sont d'abord transmises au dispositif d'émission et/ou de réception.

15. Procédé selon l'une quelconque des revendications 12 à 14 pour la gestion de données pour des données spécifiques à l'utilisateur sous forme d'un dossier médical électronique.

16. Procédé selon l'une quelconque des revendications 12 à 15, **caractérisé en ce que**, après l'établissement de la liaison, une communication bidirectionnelle (40, 41) est déclenchée entre le dispositif de communication (21) et le dispositif d'émission et/ou de réception (24).

17. Procédé selon l'une quelconque des revendications 13 à 16, **caractérisé en ce que** le dispositif (14) pour la communication en champ proche est formé en tant que transpondeur passif et **en ce qu'**un établissement de la liaison entre le dispositif de communication (21) et le dispositif d'émission et/ou de réception (24) est effectué après que le transpondeur passif a reçu un signal d'activation du dispositif d'émission et/ou de réception (24).

18. Procédé selon l'une quelconque des revendications 12 à 17, **caractérisé en ce que** la banque de données (23) avec des données spécifiques à l'utilisateur est prévue dans le dispositif de calcul central (29) et **en ce que** le dispositif de communication (21) accède ou peut accéder directement au dispositif de calcul central (29) et à la banque de données (23).

19. Procédé selon l'une quelconque des revendications 12 à 18, **caractérisé en ce que** la banque de données (23) avec des données spécifiques à l'utilisateur est prévue dans le dispositif de calcul central (29) et **en ce que** le dispositif d'émission et/ou de réception (24) ou un dispositif de traitement de données (26) relié à celui-ci accède ou peut accéder par le biais d'un module de communication approprié (28), dans le cadre des données libérées, directement au dispositif de calcul central (29) et à la banque de données (23).

20. Procédé selon l'une quelconque des revendications 12 à 19, **caractérisé en ce que** la banque de données (23) avec des données spécifiques à l'utilisateur est prévue dans le dispositif de calcul central (29) et **en ce que** le dispositif d'émission et/ou de réception (24) ou un dispositif de traitement de données (26) relié à celui-ci accède ou peut accéder par le biais du dispositif de communication (21), dans le cadre des données libérées, au dispositif de calcul central (29) et à la banque de données (23).

21. Procédé selon l'une quelconque des revendications 16 à 20, **caractérisé en ce que** des données spécifiques à l'utilisateur sont générées et/ou traitées dans le dispositif d'émission et/ou de réception (24) ou dans un dispositif de traitement de données (26) relié à celui-ci et **en ce que** ces données sont ensuite transmises au dispositif de communication (21) .

22. Procédé selon la revendication 21, **caractérisé en ce qu'**au moins des éléments constituants des données spécifiques à l'utilisateur transmises au dispositif de communication (21) sont stockés au moins temporairement dans un dispositif de stockage (16) du dispositif de communication (21).

23. Procédé selon la revendication 21 ou 22, **caractérisé en ce que** les données spécifiques à l'utilisateur transmises au dispositif de communication (21) sont représentées sur un dispositif d'affichage (22) du dispositif de communication (21).

24. Procédé selon l'une quelconque des revendications 21 à 23, **caractérisé en ce qu'**au moins des éléments constituants des données spécifiques à l'utilisateur transmises au dispositif de communication (21) sont en outre transmis par celui-ci au dispositif de calcul central (29) et déposés dans la banque de données (23).

25. Procédé selon l'une quelconque des revendications 12 à 24, **caractérisé en ce que** des données spécifiques à l'utilisateur sont générées et/ou traitées dans le dispositif d'émission et/ou de réception (24) ou dans un dispositif de traitement de données (26) relié à celui-ci et **en ce que** ces données sont ensuite stockées au moins temporairement dans un dispositif de stockage (27) associé au dispositif d'émission et/ou de réception (24) ou au dispositif de traitement de données (26).

26. Procédé selon l'une quelconque des revendications 19 à 25, **caractérisé en ce que** des données spécifiques à l'utilisateur sont générées et/ou traitées dans le dispositif d'émission et/ou de réception (24) ou dans un dispositif de traitement de données (26) relié à celui-ci et **en ce que** ces données sont ensuite transmises au dispositif de calcul central (29) et déposées dans la banque de données (23).

27. Utilisation d'un dispositif de communication (21) selon l'une quelconque des revendications 7 à 11 en tant que terminal pour un dossier médical électronique.

28. Utilisation d'un procédé selon l'une quelconque des revendications 12 à 26 pour la gestion d'un dossier médical électronique.
